# EUROPEAN PATENT APPLICATION

(11) **EP 1 589 535 A1**
(43) Date of publication of application: **26.10.2005**
(21) Application number: 05008494.6
(22) Date of filing: 19.04.2005
(51) Int. Cl.: G11B 20/18

(54) **Recording apparatus, host apparatus, semiconductor integrated circuit, recording method, program and information recording medium**

(30) Priority: 19.04.2004 JP 2004123499; 07.05.2004 JP 2004138920
(71) Applicant: MATSUSHITA ELECTRIC INDUSTRIAL CO., LTD., Kadoma-shi, Osaka 571-8501 (JP)
(72) Inventor: Nakamura, Tadashi, Nara-shi Nara 631-0056 (JP); Gotoh, Yoshiho, Osaka-shi Osaka 536-0023 (JP)
(74) Representative: Pautex Schneider, Nicole Véronique

(57) **Abstract**

A recording apparatus (300) is provided for recording information in an information recording medium (100). The recording apparatus (300) includes means for recording image data including a file structure (440,450) and a file (460,480) in the information recording medium (100); means for reproducing at least a part of the image data recorded in the information recording medium; means for comparing the reproduced data with a portion of the image data corresponding to the reproduced data so as to detect an area in which the recording of the image data has failed as an error area (510,511,512); means for extracting, as a repair data (520,521,522), data corresponding to data recorded in the error area (510,511,512) from the image data; means for recording the repair data (520,521,522) in the information recording medium (100); means for generating update information (1010) for updating the data recorded in the error area (510,511,512) to the repair data (520,521,522); and means for recording the update information (1010) in the information recording medium (100).

## Description

This non-provisional application claims priority under 35U.S.C. §119 (a) on Patent Application No. 2004-123499 filed in Japan on April 19, 2004, the entire contents of which are hereby incorporated by reference.

### BACKGROUND OF THE INVENTION

### 1. FIELD OF THE INVENTION:

The present invention relates to an information recording medium, a recording apparatus for recording information in the information recording medium, a host apparatus, a semiconductor circuit, a recording method and a program which make the recording apparatus execute a recording operation.

### 2. DESCRIPTION OF THE RELATED ART:

In recent years, various types of information recording media have been used to record digital data. Particularly, a recordable (write-once) optical disc is becoming widespread, because it is inexpensive, even though the number of times of recording is limited to one.

Examples of the optical disc include a CD-R disc and a DVD-R disc. Several techniques of incrementally writing data onto the CD-R disc or the DVD-R disc have been proposed (e.g., Patent Publication 1). Particularly, a VAT technique and a multi-border (or multi-session) method are well known.

As the background of the present invention, a description will be given of how digital data is recorded/reproduced onto/from a DVD-R disc using the VAT method and the multi-border method.

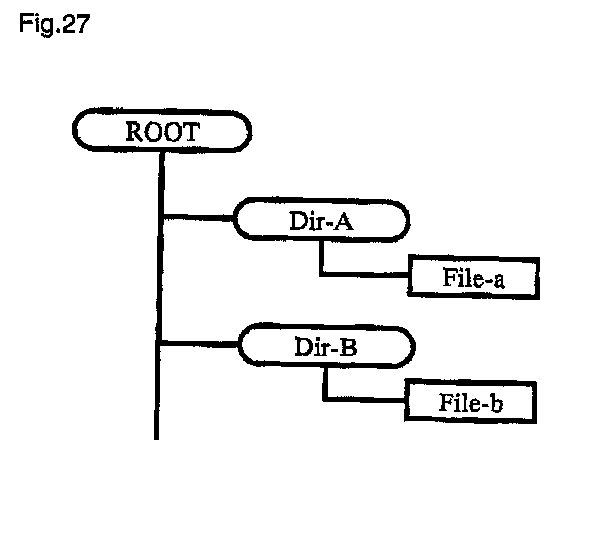

Firstly, an incremental recording method using VAT will be described with reference to the accompanying drawings. For example, a DVD-R disc is illustrated as an information recording medium. A procedure of recording files and a directory structure shown in Figure 27 onto the information recording medium, and then a resultant data structure, will be described.

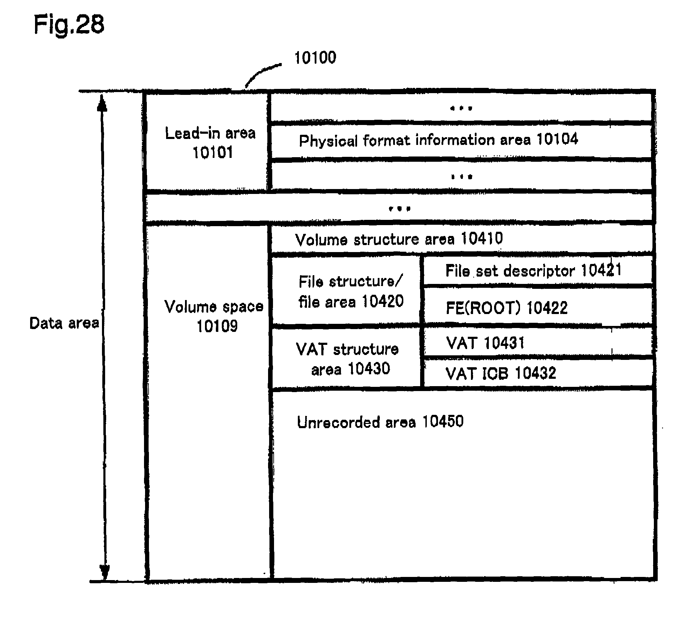

A formatting process will be described with reference to Figure 28. Figure 28 shows data immediately after the formatting process on the DVD-R disc (conventional information recording medium 10000).

The DVD-R disc is an information recording medium defined in the DVD-R physical specification. In addition, a file is recorded using a volume/file structure defined in the DVD-R file system specification. The DVD-R file system specification is in conformity with ISO/IEC 13346 standard or Universal Disk Format (UDF) specification. Hereinafter, the volume/file structure is assumed to be in conformity with the UDF specification.

As shown in Figure 28, the information recording medium 10000 has a data area composed of a lead-in area 10101 and a volume space 10109.

The lead-in area 10101 includes a physical format information area 10104. Physical format information is provided in order to record management information for various areas allocated on the information recording medium 10000. The management information includes, for example, information about addresses in a border-out area described below, and the like. Note that the physical format information area 10104 is in an unrecorded state immediately after a formatting process.

The volume space 10109 includes a volume structure area 10410, a file structure/file area 10420, and a Virtual Allocation Table (VAT) structure area 10430.

In the volume structure area 10410, a volume structure defined in the UDF specification is recorded. The volume structure includes an NSR descriptor, a primary volume descriptor, an implementation descriptor, a partition descriptor, a logical volume descriptor, an unallocated space descriptor, a terminating descriptor, a logical volume integrity descriptor, an anchor volume descriptor, and the like.

In the volume structure/file area 10410, a file set descriptor 10421 and an FE (ROOT) 10422 which are used as a start point of a directory hierarchy in a partition space, are recorded. The FE (ROOT) 10422 is a file entry of ROOT directory file.

A file entry (hereinafter referred to as FE) is a data structure which is defined in the UDF specification and is used to manage the location or size of a file to be recorded in a volume space. Note that, for the sake of simplicity, the ROOT directory file is assumed to be included in the FE (ROOT) 10422.

In the VAT structure area 10430, a VAT 10431 and a VAT ICB 10432 are recorded. The VAT is a data structure which is defined in the UDF specification for the purpose of simplification of a procedure of updating a file structure in a write-once recording medium.

When the VAT is used, a recording location in a volume space of file structure data, such as an FE, is specified using a virtual address in a virtual address space. The VAT is used to maintain a correspondence between the virtual address and a logical address in a logical address space which is a recording location on an Information recording medium.

With the above-described features, data rewrite can be virtually achieved on an information recording medium, such as a DVD-R disc, which does not allow rewrite.

A recording location on an information recording medium of the VAT is specified using a VAT ICB which is assigned to the end sector of an area in which data is recorded on an information recording medium.

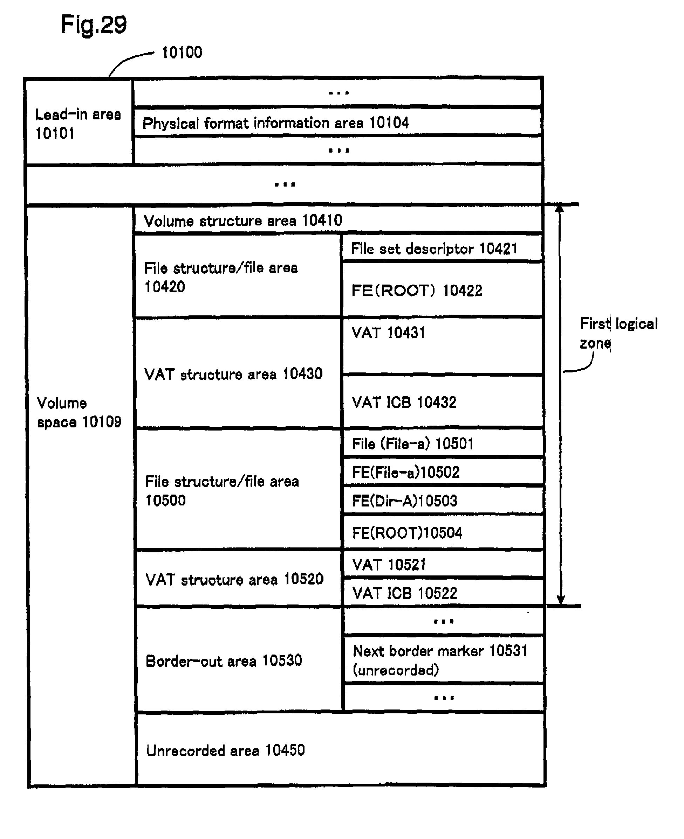

Next, in the file and directory structure of Figure 27, a procedure of recording a directory (Dir-A) and a data file (File-a) will be described with reference to Figure 29.

When the procedure of recording the directory (Dir-A) and the data file (File-a) is executed with respect to the information recording medium 10000 in the state of Figure 28, a data file (File-a) 10501, an FE (File-a) 10502, an **FE** (Dir-A) 10503, and an FE (ROOT) 10504 are recorded into a file structure/file area 10500 as shown in Figure 29. Note that the directory file is included in the FE (Dir-A) 10503.

A VAT 10521 in which the FEs 10502, 10503 and 10504 are newly registered, and a VAT ICB 10522, are recorded in a VAT structure area 10520.

Further, when a closing process is executed, predetermined data is recorded into a border-out area 10530 excluding a next border marker 10531. In addition, predetermined data is recorded into the physical format information area 10104 in the lead-in area 10101 which is in the unrecorded state after the formatting process.

Note that the closing process is executed in order to allow an information reproduction apparatus to retrieve a latest volume/file structure.

When the file recording process and the closing process are executed with respect to the information recording medium 10000 having the data structure after the formatting process of Figure 28, the data structure of Figure 29 is formed on the information recording medium 10000.

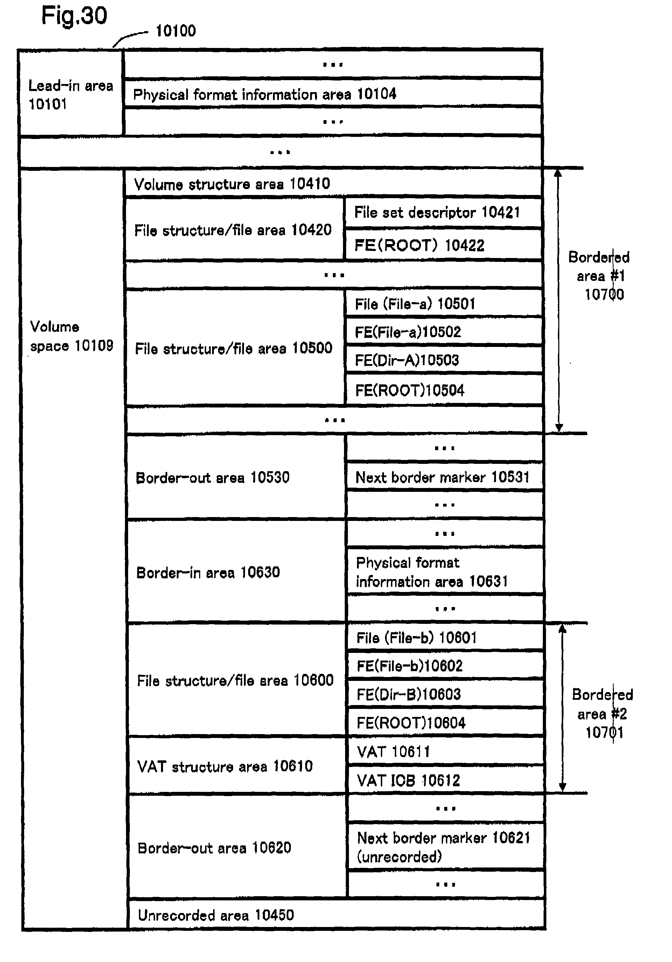

Next, in the file and directory structure of Figure 27, a procedure of recording a directory (Dir-B) and a data file (File-b) will be described with reference to Figure 30

In this case, the data file (File-b) 10601 and its relevant file structures, i.e., an FE (File-b) 10602, an FE (Dir-B) 10603 and an FE (ROOT) 10604, are recorded into a file structure/file area 10600.

In addition, the latest VAT structure, i.o., a VAT 10611 and a VAT ICB 10612, is recorded into a VAT structure area 10610.

Finally, by executing the closing process again, predetermined data is recorded into a border-out area 10620 excluding a next border marker 10621. In addition, the next border marker 10531 assigned in the border-out area 10530 and a border-in area 10630 including a physical format information area 10631 are recorded.

When the above-described file recording process and closing process are executed with respect to the information recording medium 10000 having the data structure of Figure 29, a data structure is formed on the information recording medium 10000 as shown in Figure 30.

Thus, every time the closing process is executed, the lead-in area 10101 recorded in the volume space 10109 or an area interposed between a border - in area and a border-out area is formed. Hereinafter, the area is referred to as a bordered area.

For example, in Figure 30, a bordered area #1 10700 or a bordered area #2 10701 are provided. The bordered area is similar to a session of a CD-R disc.

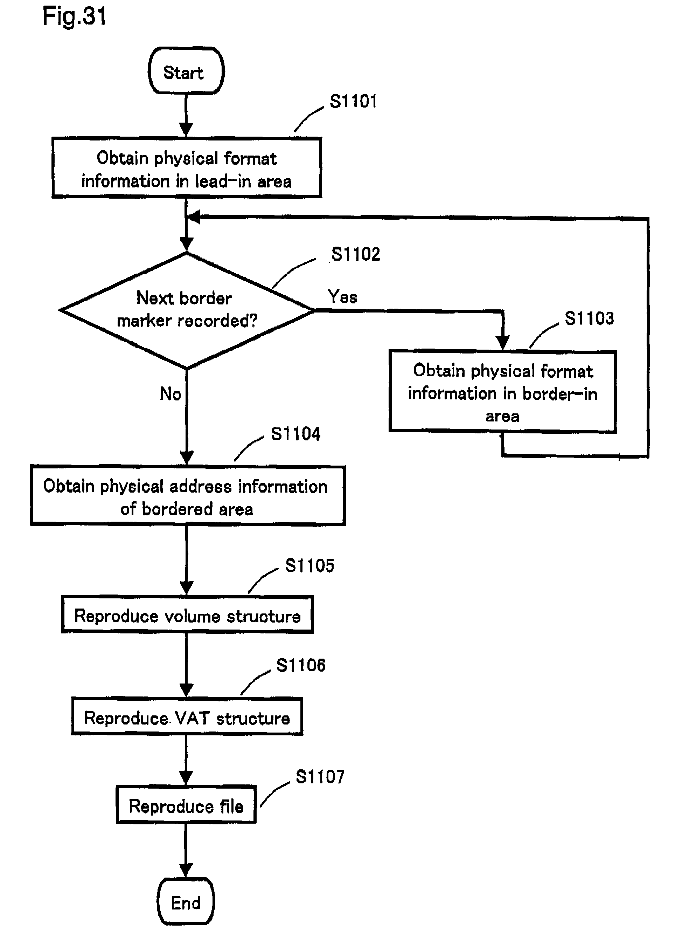

Next, a procedure of reproducing a file will be described with reference to a flowchart of the reproduction procedure shown in Figure 31. For example , a procedure of reproducing the data file (File-a) 10501 will be described for the purpose of illustration.

Data is reproduced from the physical format information area 10104 in the lead-in area 10101 to obtain physical format information (step S1101).

Next, data of the next border marker is reproduced (step S1102). The physical format information obtained in step S1101 or step S1103 includes address information of a border-out area. The data of the next border marker is recorded at a predetermined location of the border-out area, and the next border marker is reproduced from the location.

For example, in Figure 30, the physical format information area 10104 includes address information of the border-out area 10530. The physical format area 10631 included in the border-in area 10630 includes address information of the border-out area 10620.

When the next border marker reproduced in the step is in a recorded state, there is a later recorded bordered area, and therefore, step S1103 and thereafter are executed.

The next border-in area is reproduced in accordance with address information of the border-in area included in the physical format information obtained in step S1101 or step S1104 (step S1103). Physical format information is obtained from the reproduced border-in area.

When the next border marker reproduced in step S1102 is in an unrecorded state, the current bordered area is the latest, and therefore, step S1104 and thereafter are executed.

When the latest bordered area is reached, the latest physical format information thus obtained is referenced, so that a physical address of an end of an accessible area is obtained from address information of the bordered area (step S1104). In Figure 30, the end of the bordered area #2 10701 is the end of the accessible area.

Thereafter, a volume structure is reproduced (step S1105) . In this case, a volume structure area 10410 is reproduced.

The volume structure thus read includes address information of a file set descriptor 10421 and a partition start location. In the case of the VAT method, the volume structure includes a virtual partition map defined in the UDF specification. Based on the information, it is recognized that a VAT structure is recorded in a volume space.

Thereafter, the VAT ICB 10612 recorded at the end of the accessible area is reproduced (step S1106). Recording location information of the VAT is obtained, from the VAT ICB 10612 thus read, so that the VAT 10611 is read out.

When a target file and management information thereof are managed using a virtual address, the VAT 10611 obtained in step S1106 is used to reference a VAT entry in which a file entry of the target file or directory is registered (step S1107).

Thereafter, the virtual address is translated to a logical address. Using the file set descriptor 10421 in the file structure/file area 10420 as a starting point, the FE (ROOT) 10604 in the file structure/file area 10600, a ROOT directory recorded in the FE (ROOT) 10604, the FE (Dir-A) 10503 in the file structure/file area 10500, a directory (Dir-A) recorded in the FE (Dir-A) 10503, and the FE (File-a) 10502, are successively read out.

Thereafter, a recording location of the data file (File-a) 10501 is obtained from the FE (File-a) 10502, and the data file (File-a) 10501 is reproduced.

The method of incrementally writing data onto a DVD-R disc using the VAT method has been heretofore described. Alternatively, the multi-border method has been known as an incrementally recording method different from the VAT method. In the case of a CD-R disc, a similar method is called a multi-session method.

In the multi-border method, data incremental recording is executed on a bordered area-by-bordere area basis, and a volume structure and a file structure are also recorded on a bordered area-by-bordered area basis.

In the multi-border method, unlike the VAT method, data is not updated using a virtual address. When a file structure is updated, a volume structure and a file structure are newly produced, and data is recorded into a new bordered area.

In the multi-border method, reproduction is executed by confirming the latest bordered area and reading the latest volume structure therefrom.

Thereafter, data is successively tracked in accordance with a data structure defined in the UDF specification, thereby reproducing a specific file. For example, data can be read out by a reproduction procedure similar to that of a read-only DVD-ROM disc or the like.

Also in the multi-border/multi-session method, efficient data recording which employs an image data is often executed.

When all files to be recorded are known in advance (e.g., backup of data, etc.), a file-which includes all of file data to be recorded onto a hard disc drive, a volume structure and a file structure thereof, are created.

The file is an image data. The image data is recorded by allocating a bordered area (or a session) and recording the image data contiguously into the area.

Since recording is contiguously executed and a file structure is previously created, the overhead of recording is small, thereby making it possible to record an image data with high speed.
[Patent Publication 1] US Patent No. 5666531

However, when the above-described image data is used for recording, it is not possible to repair a failure in recording data, if any.

If data is recorded while executing a verify process in which data is reproduced Immediately after recording to confirm whether or not the recording is successful, the number of times of access by a recording head is significantly increased, resulting in a significant increase in recording time.

### SUMMARY OF THE INVENTION

A recording apparatus is provided for reocrding information in an information recording medium. The recording apparatus includes: means for recording image data including a file structure and a file in the information recording medium: means for reproducing at least a part of the image data recorded in the information recording medium; means for comparing the reproduced data with a portion of the image data corresponding to the reproduced data so as to detect an area in which the recording of the image data has failed as an error area; means for extracting, as a repair data, data corresponding to data recorded in the error area from the image data; means for recording the repair data in the information recording medium; means for generating update information for updating the data recorded in the error area to the repair data; and means for recording the update information in the information recording medium.

In one embodiment of the present invention, the means for generating the update information generates the update information such that the update information includes replacement management information which correlates information indicating a recording location of the data recorded in the error area with information indicating a recording location of the repair data.

In one embodiment of the present invention, the comparison of the reproduced data with the portion of the image data corresponding to the reproduced data is made per each file included in the image data.

In one embodiment of the present invention, the recording apparatus further includes: means for determining whether or not a file in the image data is a real-time file, wherein the repair data is recorded in the information recording medium when it is determined that the file is not any real-time file.

In one embodiment of the present invention, the recording apparatus further includes: means for determining a length of an extent including a part of the real-time data such that the real-time data can be reproduced continuously, when the data recorded in the error area includes a part of the real-time data; and means for extracting, as a repair data, data corresponding to the extent from image data, wherein the means for generating the update information generates the update information such that the update information includes replacement management information which correlates a first address indicating a location of the data recorded in the error area with a second address indicating a recording location of the repair data and the second address information.

In another aspect of the present invention, a host apparatus is provided for use in a recording apparatus for recording information in an information recording medium. The host apparatus includes a system control section, wherein the system control section is configured to control a drive apparatus including a recording/reproduction section for performing a recording operation or a reproduction operation for the information recording medium. The system control section includes: means for instructing the drive apparatus to record image data including a file structure and a file in the information recording medium; means for instructing the drive apparatus to reproduce at least a part of the image data recorded in the information recording medium, so as to obtain reproduced data; means for comparing the reproduced data with a portion of the image data corresponding to the reproduced data so as to detect an area in which the recording of the image data has failed as an error area; means for extracting, as a repair data, data corresponding to data recorded in the error area from the image data; means for instructing the drive apparatus to record the repair data in the information recording medium; means for generating update information for updating the data recorded in the error area to the repair data; and means for instructing the drive apparatus to record the update information in the information recording medium.

In another aspect of the present invention, a semiconductor integrated circuit is provided for use in a recording apparatus for recording information in an information recording medium. The semiconductor integrated circuit is configured to control a drive apparatus including a recording/reproduction section for performing a recording operation or a reproduction operation for the information recording medium. The semiconductor integrated circuit includes: means for instructing the drive apparatus to record image data including a file structure and a file in the information recording medium; means for instructing the drive apparatus to reproduce at least a part of the image data recorded in the information recording medium, so as to obtain reproduced data; means for comparing the reproduced data with a portion of the image data corresponding to the reproduced data so as to detect an area in which the recording of the image data has failed as an error area; means for extracting, as a repair data, data corresponding to data recorded in the error area from the image data; means for instructing the drive apparatus to record the repair data in the information recording medium; means for generating update information for updating the data recorded in the error area to the repair data; and means for instructing the drive apparatus to record the update information in the information recording medium.

In another aspect of the present invention, a recording method is provided for recording information in an information recording medium. The recording method includes the steps of: recording image data including a file structure and a file in the information recording medium; reproducing at least a part of the image data recorded in the information recording medium; comparing the reproduced data with a portion of the image data corresponding to the reproduced data so as to detect an area in which the recording of the image data has failed as an error area; extracting, as a repair data, data corresponding to data recorded in the error area from the image data; recording the repair data in the information recording medium; generating update information for updating the data recorded in the error area to the repair data; and recording the update information in the information recording medium.

In another aspect of the present invention, a method is implemented in a host apparatus for use in a recording apparatus for recording information in an information recording medium. The method includes the steps of: instructing a drive apparatus to record image data including a file structure and a file in the information recording medium; instructing the drive apparatus to reproduce at least a part of the image data recorded in the information recording medium, so as to obtain reproduced data; comparin the reproduced data with a portion of the image data corresponding to the reproduced data so as to detect an area in which the recording of the image data has failed as an error area; extracting, as a repair data, data corresponding to data recorded in the error area from the image data; instructing the drive apparatus to record the repair data in the information recording medium; generating update information for updating the data recorded in the error area to the repair data; and instructing the drive apparatus to record the update information in the information recording medium.

In another aspect of the present invention, a program is implemented in a host apparatus for use in a recording apparatus for recording information in an information recording medium. The program includes the step of: instructing a drive apparatus to record image data including a file structure and a file in the information recording medium; instructing the drive apparatus to reproduce at least a part of the image data recorded in the information recording medium, so as to obtain reproduced data; comparing the reproduced data with a portion of the image data corresponding to the reproduced data so as to detect an area in which the recording of the image data has failed as an error area; extracting, as a repair data, data corresponding to data recorded in the error area from the image data; instructing the drive apparatus to record the repair data in the information recording medium; generating update information for updating the data recorded in the error area to the repair data; and instructing the drive apparatus to record the update information in the information recording medium.

In another aspect of the present invention, an information recording medium having update information recorded thereon is provided. The update information is information indicating that data recorded in an error area has been updated to a repair data. The error area is an area in which the recording of image data has failed. Tthe repair data is obtained by extracting, from the image data, data corresponding to the data recorded in the error area.

According to the present invention, even if a failure occurs in recording of image data, the data can be repaired. As a result, reliable recording/reproduction of data can be achieved.

In addition, the image data can be recorded at a higher speed, compared to a case where a verify process is executed successively.

Thus, the invention described herein makes possible the advantages of providing an information recording medium in which, even when an image data is used for recording of a file, data can be reliably recorded/reproduced, and even if a recording failure occurs, the failure can be repaired, a method and apparatus of recording information onto the information recording medium, and a method and apparatus of reproducing information recorded on the information recording medium.

These and other advantages of the present invention will become apparent to those skilled in the art upon reading and understanding the following detailed description with reference to the accompanying figures.

### BRIEF DESCRIPTION OF THE DRAWINGS

Figure 1A is a diagram showing an appearance of an information recording medium according to an embodiment of the present invention.
Figure 1B is a diagram showing a data structure of the information recording medium according to an embodiment of the present invention.
Figure 1C is a diagram showing a data structure of the user data area according to an embodiment of the present invention.
Figure 2A is a diagram showing a data structure of a replacement management information list according to an embodiment of the present invention.
Figure 2B is a diagram showing a data structure of the replacement management information.
Figure 3A is a diagram showing a data structure of session management information according to an embodiment of the present invention.
Figure 3B is a diagram showing a data structure of track management information according to an embodiment of the present invention.
Figure 3C is a diagram showing a data structure of space bitmap management information according to an embodiment of the present invention.
Figure 4 is a diagram showing a state in which a unrecorded area management is performed on the user data area according to an embodiment of the present invention.
Figure 5 is a diagram showing a data structure of disc structure information according to an embodiment of the present invention.
Figure 6 is a diagram showing a data structure of anther information recording medium according to an embodiment of the present invention.
Figure 7 is a block diagram showing a structure of an information recording/reproduction apparatus according to an embodiment of the present invention.
Figure 8A is a diagram showing a data structure of the information recording medium according to an embodiment of the present invention.
Figure 8B is a diagram showing an example of a file/directory structure according to an embodiment of the present invention.
Figure 9A is a diagram showing a data structure of image data according to an embodiment of the present invention.
Figure 9B is a diagram showing another data arrangement in a metadata file according to an embodiment of the present invention.
Figure 10 is a diagram for explaining a data structure relating to a metadata file defined in the UDF specification version 2.5.
Figure 11A is a diagram showing a data arrangement of a volume structure area according to an embodiment of the present invention.
Figure 11B is a diagram showing a data arrangement of a volume structure area according to an embodiment of the present invention.
Figure 12 is a flowchart showing a recording process according to an embodiment of the present invention.
Figure 13 is a diagram showing a data structure of the information recording medium according to an embodiment of the present invention.
Figure 14 is a flowchart showing a repair process according to an embodiment of the present invention.
Figure 15 is a diagram showing a data structure of the information recording medium after the image data repair process according to an embodiment of the present invention.
Figure 16 is a flowchart showing a reproduction process according to an embodiment of the present invention.
Figure 17 is a flowchart showing a repair process according to an embodiment of the present invention.
Figure 18 is a diagram showing a data structure of the information recording medium according to an embodiment of the present invention.
Figure 19 is a diagram showing a data structure of the information recording medium according to an embodiment of the present invention.
Figure 20 is a diagram showing a data structure of the image data according to an embodiment of the present invention.
Figure 21 is a flowchart showing a recording process according to an embodiment of the present invention.
Figure 22 is a diagram showing a data structure of the information recording medium according to an embodiment of the present invention.
Figure 23 is a flowchart showing a repair process according to an embodiment of the present invention.
Figure 24 is a flowchart showing a repair recording process according to an embodiment of the present invention.
Figure 25A is a diagram showing a data structure of the information recording medium according to an embodiment of the present invention.
Figure 25B is a diagram showing a data structure of the information recording medium according to an embodiment of the present invention.
Figure 26 is a flowchart showing a reproduction process according to an embodiment of the present invention.
Figure 27 is a diagram showing a file/directory structure recorded in the information recording medium.
Figure 28 is a diagram showing a data structure of an information recording medium after a formatting process according to the conventional technique.
Figure 29 is a diagram showing a data structure of an information recording medium after a file recording process according to the conventional technique.
Figure 30 is a diagram showing a data structure of an information recording medium after a file recording process according to the conventional technique.
Figure 31 is a flowchart showing a file reproduction process according to the conventional technique.

### DESCRIPTION OF THE PREFERRED EMBODIMENTS

Hereinafter, the present invention will be described by way of illustrative examples with reference to the accompanying drawings.

### (Embodiment 1)

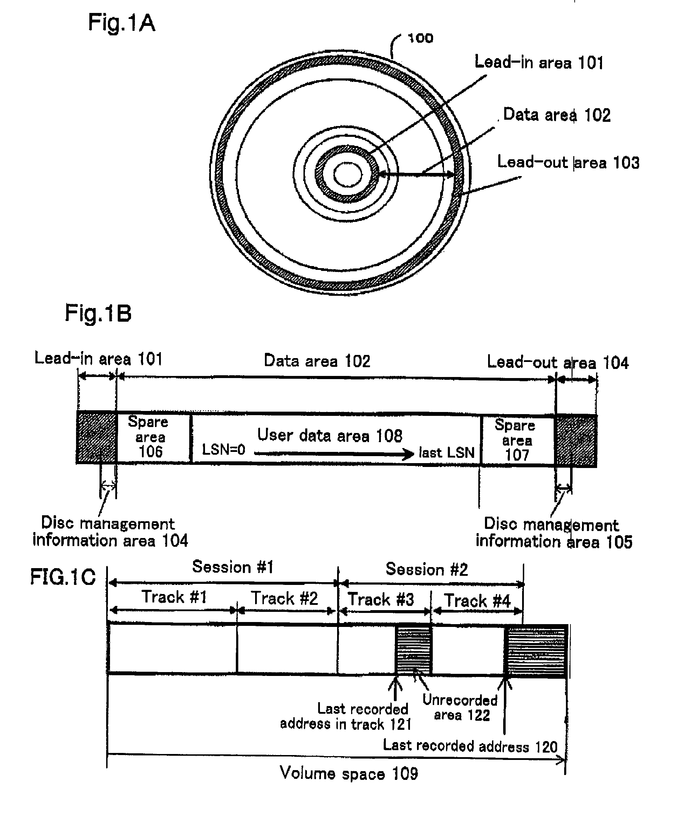

Figure 1A shows an appearance of an information recording medium 100 according to an embodiment of the present invention.

A lead-in area 101 is arranged in an innermost periphery of the information recording medium 100. A lead-out area 103 is arranged in an outermost periphery of the information recording medium 100. A data area 102 is arranged between the lead-in area 101 and the lead-out area 103 of the information recording medium 100.

In the lead-in area 101, a reference signal required for an optical pickup to access the information recording medium 100, an identification signal for discriminating the information recording medium 100 from other recording media, and the like are recorded. Also in the lead-out area 103, information similar to that recorded in the lead-in area 101 is recorded.

A plurality of physical sectors are assigned to the lead-in area 101, the data area 102 and the lead-out area 103. Each sector is the smallest access unit. Each sector can be identified by address information (i.e. a physical sector number; hereinafter, it is referred to as "PSN").

Data can be recorded/reproduced as the smallest unit of an ECC block (or an ECC cluster) including a plurality of physical sectors .

Figure 1B shows a data structure of the information recording medium 100. In Figure 1B, the lead-in area 101, the data area 102 and the lead-out area 103, which are concentrically shown in Figure 1A, are shown in a horizontal direction.

The lead-in area 101 includes disc management information area 104. The lead-out area 103 includes disc management information area 105. In each of the disc management information areas 104 and 105, disc management information is recorded. The disc management information includes replacement information, session management information, space bitmap management information, and the like.

As described later, a part of the disc management information areas 104 and 105 is used as an area for updating the disc management information. This area is called a temporary disc management information area.

The replacement information is referred to as a replacement management information list including original location information indicating a location of a defective sector having a defect occurred on the information recording medium 100 (or an ECC block including the defective sector) and replacement location information indicating a location of a replacement sector which can be used instead of the defective sector (or an ECC block including the replacement sector).

The data area 102 includes a spare area 106, a user data area 108 and a spare area 107.

Each of the spare areas 106 and 107 is an area including a replacement sector which is used instead of the defective sector.

The user data area 108 is an area used to record user data.

Conventionally, replacement recording combining replacement information and spares is performed with a verify process. The verify process is referred to as a process for reproducing data immediately after the data is recorded, and comparing the reproduced data with the recorded data so as to determine whether or not the data is correctly recorded.

When an error occurs during the verify process, i.e., data is not correctly recorded, replacement recording is performed. That is, a defective sector (or an ECC block including the defective sector) is replaced with a replacement sector (or an ECC block including the replacement sector), and data is recorded in the replacement sector (or an ECC block including the replacement sector). This method is called a linear replacement method.

By using a replacement mechanism which is obtained by combining replacement information with replacement sectors, it is possible to implement a pseudo-overwrite recording for a write-once information recording medium.

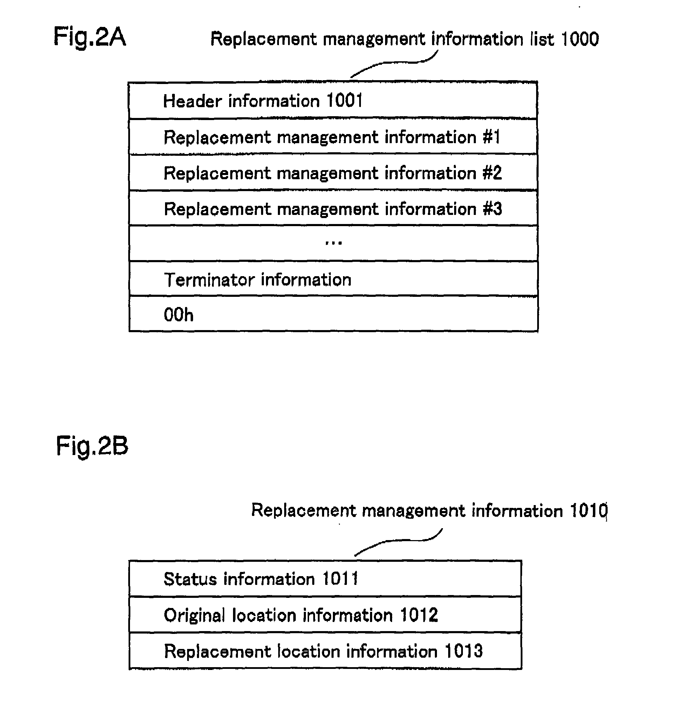

Next, the pseudo-overwrite recording will be described with reference to Figures 2A and 2B. The pseudo-overwrite recording is referred to as a method for mapping a physical address at which data is actually recorded to another place without changing an apparent logical address at which the data is apparently recorded. In order to perform such a mapping, a replacement management information list 1000 shown in Figure 2A is used as the replacement information.

Figure 2A shows a data structure of the replacement management information list 1000.

The replacement management information list 1000 includes header information 1001 and a plurality of replacement management information 1010 (e.g. replacement management information #1, #2, #3, ...).

The header information 1001 includes the number of replacement management information included in the replacement management information list 1000. The replacement management information includes information representing the mapping mentioned above.

Figure 2B shows a data structure of replacement management information 1010. The replacement management information 1010 includes status information 1011, original location information 1012, and replacement location information 1013.

The status information 1011 includes status information on the mapping mentioned above. For example, the status information 1011 indicates a valid/ invalid status of the original location information 1012 and the replacement location information 1013.

The original location information 1012 indicates a location (e.g. physical address) of the original information.

The replacement location information 1013 indicates a location (e.g. physical address) of the replacement information.

The mapping mentioned above is performed by converting the location (e.g. physical address) of the original information indicated by the original location information 1012 into the location (e.g. physical address) of the replacement information indicated by the replacement location information 1013.

If data overwrite is instructed with respect to a logical address at which data is already recorded, new data is recorded in a sector having a physical address which is different from the physical address of the sector in which the data is recorded, new replacement management information 1011 is generated for mapping the sector in which the data is recorded to the sector in which the new data is recorded, and the new replacement management information 1011 is added to the replacement management information list 1000. Thus, by updating the replacement information while maintaining the logical address, it is possible to implement a status in which the data is pseudo-overwritten, although the data is not physically overwritten.

Hereafter, such a recording method is referred to as a pseudo-overwrite recording. The pseudo- overwrite recording is utilized to implement a repair recording method which is described below.

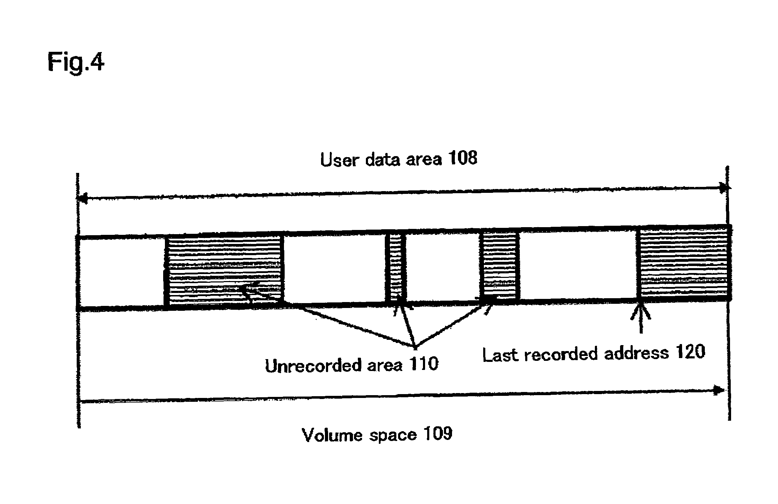

Next, unrecorded area management on the user data area 108 will be described. Unrecorded area management according to a sequential recording method will be described with reference to Figure 1C, and then, unrecorded area management according to a random recording method will be described with reference to Figure 4.

Figure 1C shows a status in which unrecorded area management according to the sequential recording method is performed on the user data area 108 shown in Figure 1B.

The user data area 108 includes a plurality of sessions. Each session includes a plurality of tracks. Thus, the user data area 108 is managed by a unit of session/track.

Each track is a contiguous area on the information recording medium 100. Each track is managed by the track management information which is described below.

Each session includes a plurality of tracks which are contiguously allocated on the information recording medium 100. Each session is managed by the session management information which is described below.

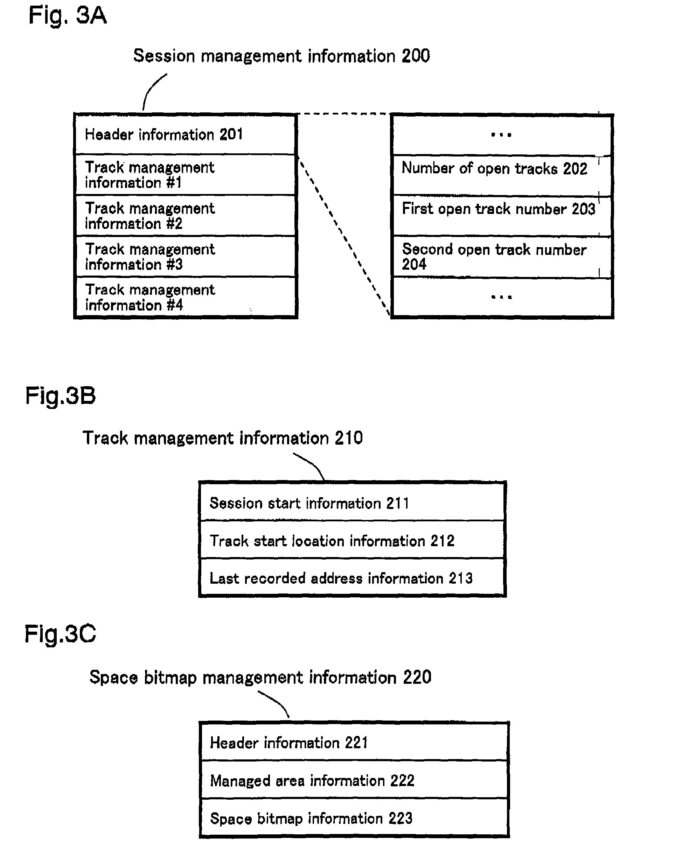

Figure 3A shows a data structure of session management information 200 for managing a session. The session management information 200 is included in the disc management information.

The disc management information is recorded in the disc management information area 104. The disc management information area 105 is provided for improving the reliability of the information recording medium 100. Specifically, the disc management information area 105 is an extended area for recording a duplication of the disc management information recorded in the disc management information area 104 and for recording data which cannot be recorded in the disc management information area 104. Hereinafter, the detailed description of the disc management information area 105 will be omitted.

The session management information 200 includes header information 201 and a plurality of track management information.

The header information 201 has general information such as an identifier of the session management information 200, the number of the track management information 210 shown in Figure 3B.

The track management information #N has information corresponding to track #N shown in Figure 1C. Herein, N is an integer greater than or equal to 1.

Figure 3B shows a data structure of track management information 210 for managing a track. The track management information 210 is included in the disc management information.

The track management information 210 includes session start information 211 for indicating whether or not the track is a leading track of a session; track start location information 212 for indicating a start location of a track; and last recorded address information 213 for indicating a location at which data has been last recorded in a track.

If a track managed by certain track management information is located at a leading position of a session, a value (e.g. "1") indicating that the track is located at the leading position of the session is set to the session start information 211. Otherwise, another value (e. g. "0") is set to the session start information 211.

The track start location information 212 includes a physical address indicating a start location of a track.

The last recorded address information 213 includes a physical address indicating a location at which data is lastly recorded within the track. The last recorded address in track 121 shown in Figure 1C is an example of the location indicated by the last recorded address information 213.

In the embodiment of the present invention, data can be recorded on a track-by-track basis. Data is recorded from a leading position of each track, and the data is contiguously allocated in the track (sequential recording). After data recording is performed within the track, a location at which data is lastly recorded within the track is reflected in the last recorded address information 213.

When the recording is re-started within the track, by checking the latest value of the last recorded address information 213, it is possible to determine the next recording start location within the track. In general, the next recording start location is the next physical sector of a physical sector indicated by the last recorded address information 213.

Alternatively, when the data recording is performed on the information recording medium 100 as the smallest unit of an ECC block, the next recording start location may indicate an ECC block next to an ECC block including a physical sector indicated by the last recorded address information 213.

In a session #2 shown in Figure 1C, unrecorded area 122 after the last recorded address 121 is a free space area, into which data can be recorded.

A track having a state in which data is recordable is called an open track (or a recordable track). A track number of the open track is included in the header information 201 of the session management information 200 shown in Figure 3A (e.g, a first open track number 203, a second open track number 204, etc.).

A track having a state in which data is not recordable for some reason (e.g. there does not exist unrecorded area, user's instruction) is called a closed track (or a non-recordable track). A track number of the closed track is not included in the header information 201.
by checking the track number of the open track(s) and the last recorded address information 213, it is possible to detect a free space area on the information recording medium 100.

Figure 4 shows a status in which unrecorded area management according to the random recording method is performed on the user data area 108 shown in Figure 1B.

A type of random recording, with which data is recorded at any arbitrary location on an information recording medium, can be performed even on the write-once information recording medium 100 by managing recorded sectors (or ECC blocks). Figure 4 shows a state in which data is not yet recorded in an unrecorded area 110, and an area which is located closer to the inner periphery than the location indicated by the last recorded address 120 is already used to record data.

In order to implement the random recording, it is necessary to manage a free space area and a last recorded address on the information recording medium 100. In the present embodiment, such a management can be implemented by recording disc structure information 1100 in the disc management information areas 104 and 105.

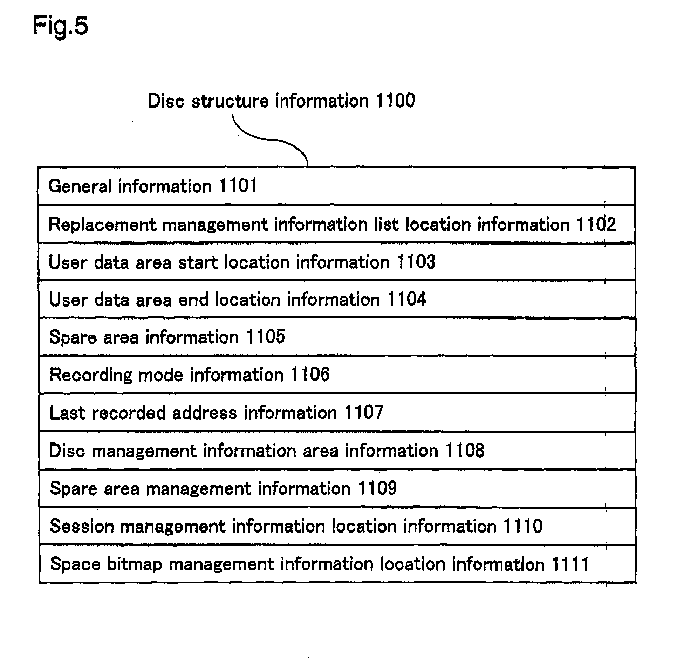

Figure 5 shows a data structure of the disc structure information 1100 recorded in the disc management information are 104.

The disc structure information 1100 includes last recorded address information 1107. The last recorded address information 1107 indicates the last recorded address 120.

In the disc management information area 104, space bitmap management information 220 shown in Figure 3C is also recorded. The space bitmap management information 220 includes header information 221, managed area information 222 and space bitmap information 223.

The header information 221 has general information such as an identifier for the space bitmap management information 220, and the like.

The managed area information 222 includes information specifying an area in the user data area 108 which includes a sector (or an ECC block) whose unrecorded/recorded state is managed by the space bitmap management information 220. For example, the managed area information 222 includes a start location of the area and a length of the area.

The space bitmap information 223 includes information indicating whether or not each sector included in a managed area is in the unrecorded state or the recorded state. For example, one bit data is allocated for each sector. For example, an unrecorded sector is assigned "0", while a recorded sector is assigned "1". Thereby, the unrecorded/recorded status can be managed for all sectors in the managed area.

As described above, it is possible to manage the unrecorded/recorded status of a sector on the information recording medium 100 using either the session management information 200 or the space bitmap management information 220. Therefore, the session management information 200 or the space bitmap management information 220 may be selected and used, depending on applications. Alternatively, both of them may be used. The information on the unrecorded area management method is included in recording mode information 1106 of the disc structure information 1100.

The disc structure information 1100 further includes general information 1101 concerning the overall disc structure information 1100, replacement management information list location information 1102 indicating locations of the latest replacement management information list 1000 in the disc management information areas 104 and 105 , user data area start location information 1103 indicating a start location of the user data area 108, user data area end location information 1104 indicating an end location of the user data area 108, and spare area information 1105 and spare area management information 1109 indicating the sizes of the spare areas 105 and 107 and an area usable for replacement.

By using the spare area information 1105, the size of a spare area can be changed for each information recording medium. Further, by using the disc management information location information 1108, it is possible to provide the temporary disc management information area described above in the spare area 106 or the spare area 107.

The disc structure information 1100 further includes session management information location information 1110 for indicating locations of the latest session management information 200 in the disc management information areas 104 and 105, space bitmap management information location information 1111 for indicating locations of the latest space bitmap management information 220 in the disc management information areas 104 and 105.

In examples shown in Figures 1C and 4, user data recorded in the user data area 108 is managed by a file system. A space managed by the file system is referred to as a volume space 109.

A plurality of logical sectors are assigned to the volume space 109. Each logical sector can be identified by address information (i.e. logical sector number; hereinafter it is referred to as "LSN").

Note that, in the description below, a descriptor, a pointer and the like recorded on the information recording medium 100 as a volume/file structure of the file system are assumed to have a data structure defined in the ISO/IEC13346 standard or the UDF (Universal Disk Format) specification unless otherwise specified.

A metadata partition and a metadata file structure described below are assumed to have a data structure defined in version 2.5 or version 2.6 of the UDF specification.

It is described that the information recording medium 100 shown in Figures 1A to 1C has only one recording layer. However, there may exist an information recording medium having two or more recording layers.

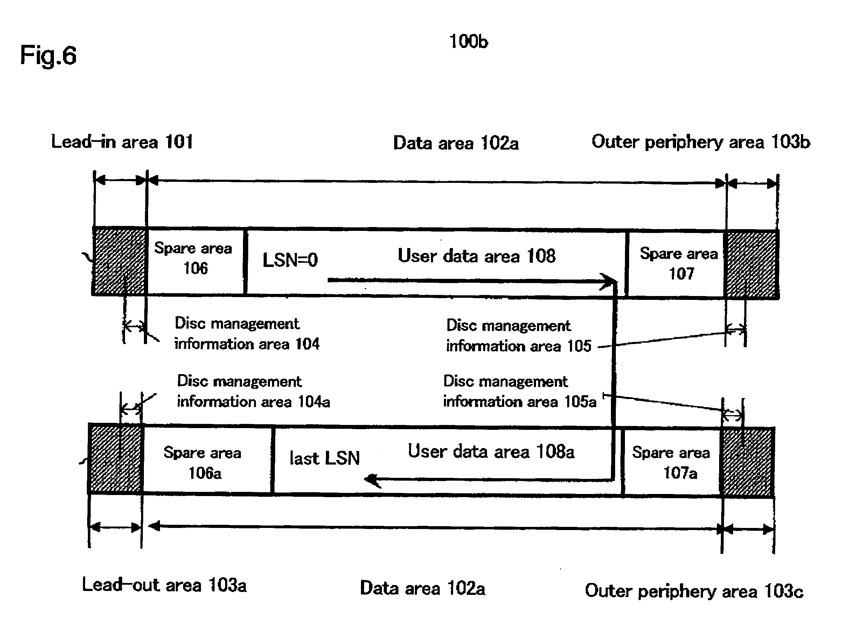

Figure 6 shows a data structure of an information recording medium 100b having two recording layers. In Figure 6, **L0** designates a first layer and L1 designates a second layer.

Each of the first and second layers has substantially the same structure as that of the information recording medium 100. Specifically, a lead-in area 101 is provided in an innermost periphery of the first layer, and a lead-out area 103a is provided in an innermost periphery of the second layer. Further, an outer area 103b is provided in an outermost periphery of the first layer, and an outer area 103o is provided in an outermost periphery of the second layer. The lead-in area 101, the outer area 103b, the lead-out area 103a and the outer area 103c includes the disc management information areas 104, 105, 104a and 105a, respectively.

Further, as shown in Figure 6, spare areas 106, ; 106a, 107 and 107a are provided. The size of each spare area can be changed for each information recording medium as described above. Further, it is possible to provide additional temporary disc management information area in each spare area.

User data areas 108 and 108a are handled as logically one volume space having contiguous logical addresses.

As described above, an information recording medium having a plurality of recording layers can be handled logically as an information recording medium which has a single recording layer.

Hereinafter, an information recording medium having a single recording layer will be described. The description can be applied to an information recording medium having a plurality of recording layers. An information recording medium having a plurality of recording layers will be described as required.

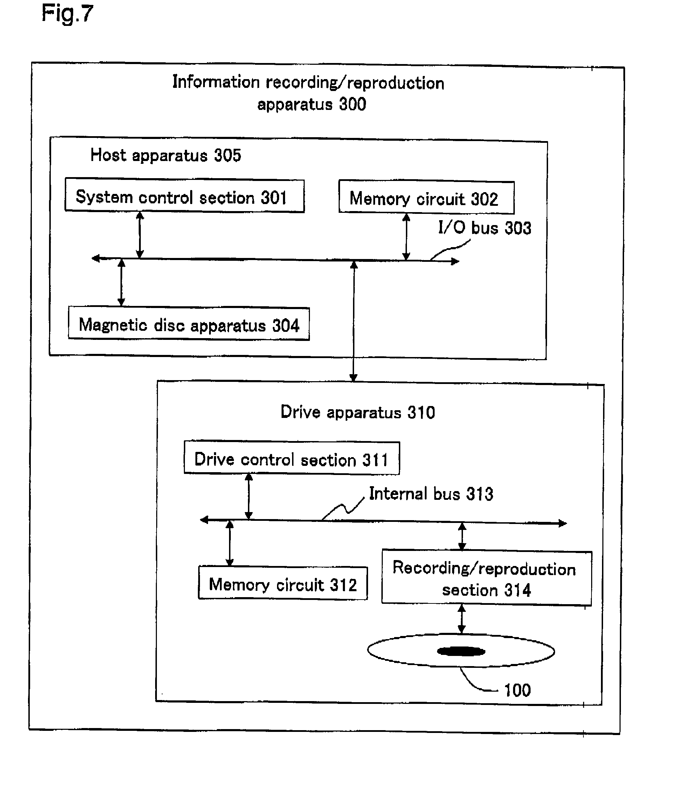

Figure 7 shows a structure of an information recording/reproduction apparatus 300 according to an embodiment of the present invention.

The information reproduction apparatus 300 includes a host apparatus 305 and a drive apparatus 310.

The host apparatus 305 may be a computer system or personal computer, for example.

The drive apparatus 310 may be any one of a recording apparatus, a reproduction apparatus and a recording/reproduction apparatus. The entire information recording/reproduction system 300 may be called a recording apparatus, a reproduction apparatus, or a recording/reproduction apparatus.

The host apparatus 305 includes a system control section 301 and a memory circuit 302. The host apparatus 305 may further include a magnetic disc apparatus 304 such as a hard disc drive. The components in the host apparatus 305 are connected to each other via an I/O bus 303.

The system control section 301 may be implemented, for example, by a microprocessor including a system control program and an operation memory. The system control section 301 performs control and operation of recording/reproduction of a volume structure/file structure of a file system, recording/reproduction of a metadata partition/file structure, recording/reproduction of a file, recording/reproduction of lead-in/lead-out areas and the like.

The memory circuit 302 is used for, for example, operation and temporary storage of a volume structure, a file structure, a metadata partition/file structure and a file.

The drive apparatus 310 includes a drive control section 311, a memory circuit 312 and a recording/reproduction section 314. The components in the drive apparatus 310 are connected to each other via an I/O bus 313.

The drive control section 311 may be implemented, for example, by a microprocessor including a drive control program and an operation memory. The drive control section 311 controls and operates recording/reproduction for a disc management information area and a spare area, pseudo-overwrite/reproduction, and the like.

The system control section 301 and the drive control section 311 shown in Figure 7 may be implemented by a semiconductor integrated circuit such as an LSI. Alternatively, they may be implemented by a general processor and a memory (e.g. ROM).

A program executable by a computer (e.g. a general processor) is stored in the memory (e.g. ROM). The program may represent a reproduction process or a recording process according to the present invention, which will be described below. Any computer (e.g. a general processor) performs the reproduction process or the recording process according to the present invention in accordance with the program.

The memory circuit 312 is used for, for example, operation and temporary storage of data relating to a disc management information area or a spare area and data transferred to the drive apparatus 310.

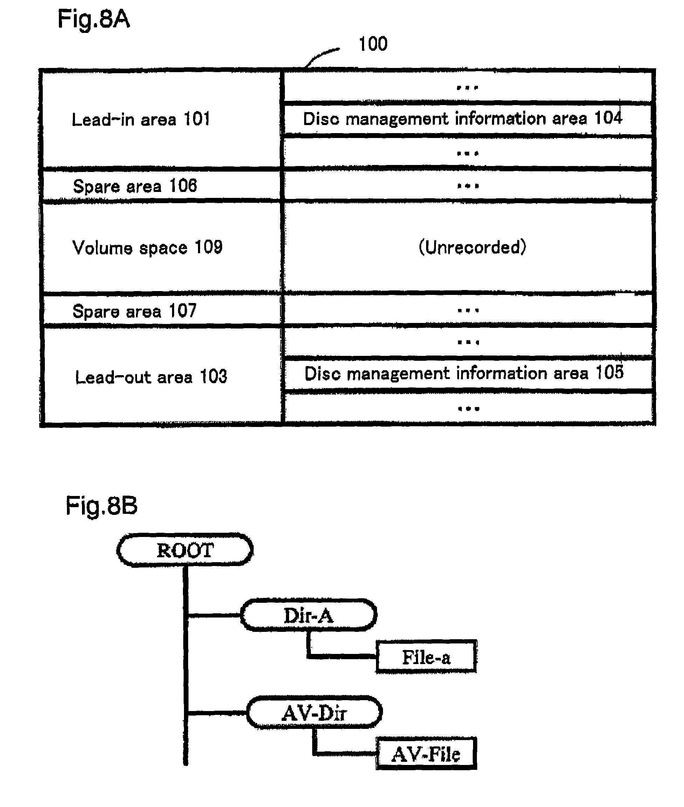

Next, a data structure on the information recording medium 100 immediately before recording an image data in the embodiment of the present invention will be described with reference to Figure 8A.

In Figure 8A, there exists a lead-in area 101 including a disc management information area 104 and a lead-out area 103 including a disc management information area 105. Data is not yet recorded in the volume space 109.

Assuming this state, a procedure and a data structure when recording an image data 500 including a file and directory hierarchical structure shown in Figure 8B will be described.

In Figure 8B, there exists File-a which is a general data file, Dir-A which is its parent directory, AV-File including AV data encoded in accordance with an MPEG scheme or the like, and AV-Dir which is its parent directory.

An AV data is referred to as data including at least one of audio data and video data. The AV data is also called a real-time data. A file including the AV data is referred to as an AV file. The AV file is also called a real-time file. The real-time file needs to be recorded/reproduced without interruption, unlike a general data file. When a real-time data is recorded in the information recording medium 100, the recording process is controlled such that the real-time file is allocated in a physically contiguous area on the information recording medium 100.

The contiguous area is called a Contiguous Data Area (CDA) in the DVD specification.

The conditions for the contiguous area determined as parameters representing a data rate for the AV data included in the real-time file, access performance or reproduction performance of the drive apparatus and the size of the buffer memory.

In the UDF specification, a file type (=249) indicating a real-time file is defined. The real-time file is managed separately from the general data file.

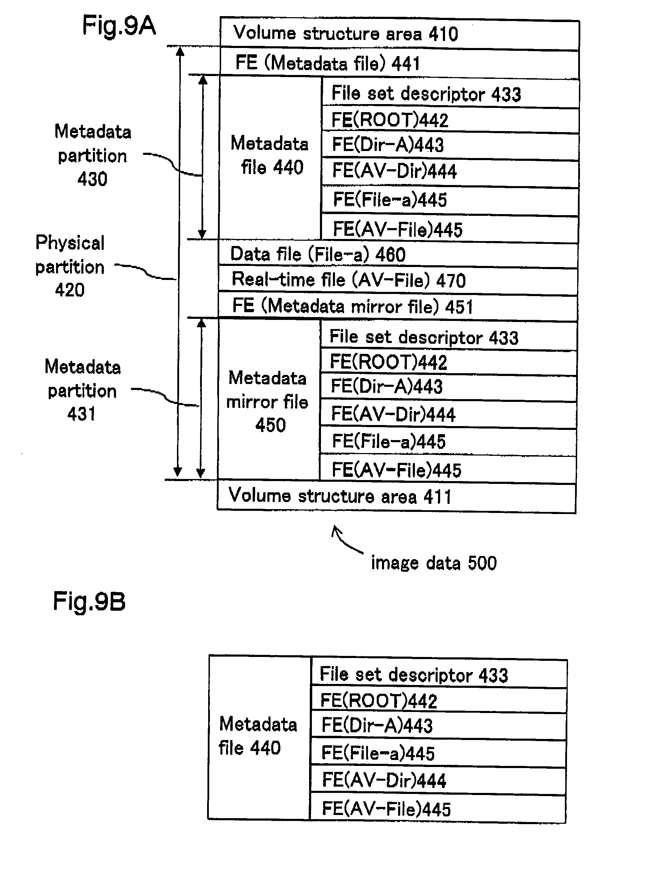

Figure 9A shows a data structure of the image data 500. The image data 500 is data obtained by integrating a file/directory hierarchical structure shown in Figure 8B and file management information for managing the file/directory hierarchical structure.

The image data 500 includes a volume structure area 410, an FE (metadata file) 441, a metadata file 440, a data file (File-a) 460, a real-time file (AV-File) 470, an FE (meta data mirror file) 451, a volume structure area 411, and a metadata mirror file 450. The arrangement of these files is not limited to this order. Any order may be taken as far as the order is conformed with the UDF specification.

The areas excluding the volume structure areas 410 and 411 correspond to a physical partition 420 defined in the UDF specification version 2.5 or the like.

The physical partition 420 includes metadata partitions 430 and 431.

In the UDF specification version 2.5, all information relating to a file structure such as an FE and a directory file recorded in a volume space is provided in a metadata partition.

The metadata partition is managed by a metadata file.

In an example shown in Figure 9A, the metadata file 440 includes, as file management information, a file set descriptor 433, an FE (ROOT) 442, an FE (Dir-A) 443, an FE (AV-Dir) 444, an FE (File-a) 445, and an FE (AV-File) 445.

The metadata mirror file 450 is duplicated data of the metadata file 440 (i.e. the metadata mirror file 450 has the same data as the metadata file 440). The metadata file 440 and the metadata mirror file 450 are preferably separately arranged from each other in order to avoid destruction of file management information for some reason (e.g., a scratch on an information recording medium, etc.).

Hereinafter, it is assumed that a directory file is included in each FE for the sake of simplicity.

The recording locations and volumes of the metadata file 440 and the metadata mirror file 450 in the physical partition 420 are managed by the FE (metadata file) 441 and the FE (metadata mirror file) 451.

The data file (File-a) 460 and the real-time file (AV-File) 470 are allocated in the physical partition 420.

Particularly, the real-time file (AV-File) 470 is allocated in a contiguous area having a predetermine size in the physical partition 420 so that data of the real-time file can be reproduced without any interruption.

The data in the metadata file 440 may be arranged as shown in Figure 9B, in view of the directory hierarchy.

Specifically, a directory (Dir-A) and a data file (File-a) under the directory are sequentially allocated. Thereafter, a directory (AV-Dir) and a data file (AV-File) under the directory are sequentially allocated.

Such allocation of directory/files makes it possible to efficiently access the data in a particular application. For example, in a particular application such as TV program recording, it is possible that the directory tree for recording data is first determined and then any file and any directory under the directory are located within the neighborhood.

In the data structure of the image data, each of the FE (metadata file) and the metadata file can be located at a leading position of an ECC block. In this case, padding data (e.g. data having all zeros) is recorded between the FE (metadata file) and the metadata file.

Similarly, padding data (e.g. data having all zeros) may be recorded between the FE (metadata mirror file) and the metadata mirror file.

In an example shown in Figure 9A, the volume structure area 410 and the physical partition 420 are recorded in the volume space 109.

The image data 500 is created on the magnetic disc apparatus 304 or the like. Then, it is recorded sequentially from the head into the volume space 109.

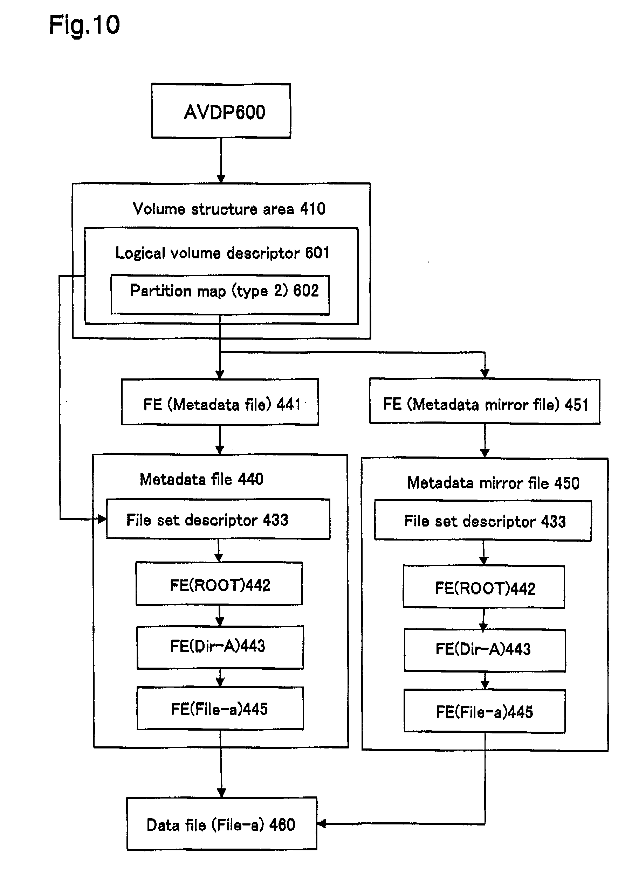

Next, a reference relationship between data in a volume structure and a file structure when a metadata data file is used will be described with reference to Figure 10.

In a volume structure and a file structure defined in the UDF specification, an anchor volume descriptor pointer 600 (hereinafter referred to as AVDP 600) is referred to as a start point.

By reading out the AVDP 600 recorded at a predetermined location on the information recording medium 100, a recording location of the volume structure area 410 can be detected.

The volume structure area 410 includes a logical volume descriptor 601. A recording location of the file set descriptor 433 in the metadata partition 430 can be detected from the logical volume descriptor 601.

The logical volume descriptor 601 includes a partition map (type 2) 602. A recording location of the FE (metadata file) 441 and a recording location of the FE (metadatamirror file) 451 can be detected from the partition map (type 2) 602.

The metadata file 440 is also a type of file which is managed by an FE. From the FE (metadata file) 441, a recording location of the metadata file 440 in the physical partition 420, i.e., a recording location of the metadata partition 430, can be detected.

In this case, using information indicating the recording location of the file set descriptor 433 described above, a file structure is sequentially searched from the ROOT directory. As a result, it is possible to access the data file (File-a) 460, for example.

The duplication of the metadata file 440 is recorded in the metadata mirror file 450. Accordingly, the data file (File-a) 460 can be also read using the metadata mirror file 450.

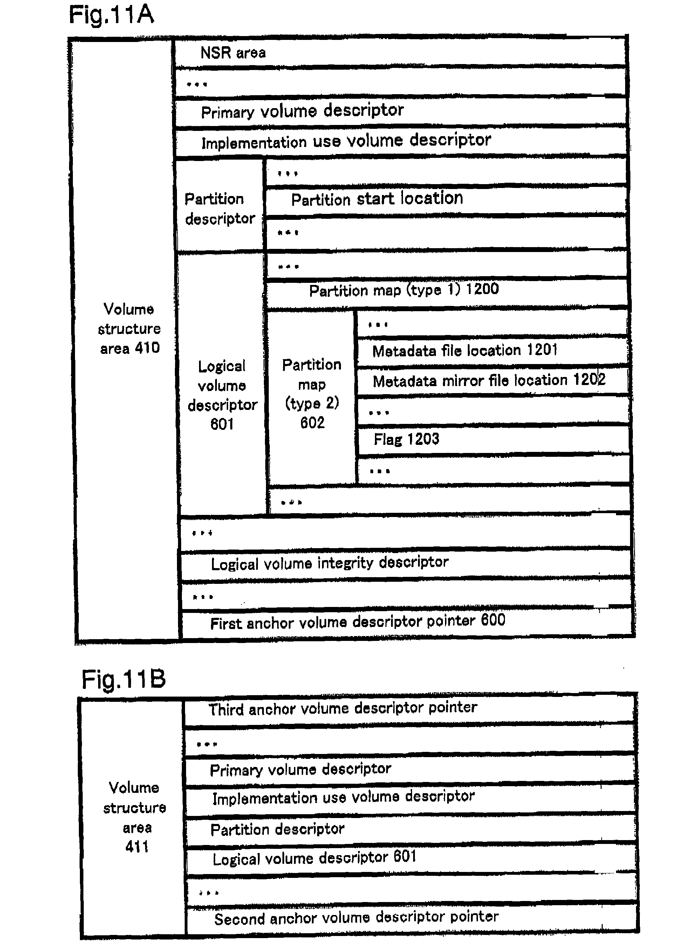

Figure 11A shows an example of a data structure and a data arrangement of the volume structure area 410. The volume structure area 410 includes the logical volume descriptor 601 and the anchor volume descriptor pointer 600.

The logical volume descriptor 601 includes a partition map (type 1) 1200, a metadata file location 1201, a metadata mirror file location 1202 and a flag 1203.

The partition map (type 1) 1200 is information for managing a physical partition.

The metadata file location 1201 is information indicating a location in a physical partition of the FE (metadata file) 441.

The metadata mirror file location 1202 is information indicating a location in a physical partition of the FE (metadata mirror file) 451.

The flag 1203 includes, for example, information indicating whether or not the metadata mirror file 450 is present on the information recording medium 100. The metadata mirror file 450 is an optional function of the UDF specification

Figure 11B shows an example of a data structure and a data arrangement of the volume structure area 411.

In the volume structure area 411, information similar to that recorded in the volume structure area 410 is recorded. In the volume structure area 411, the second and third anchor volume descriptor pointers are recorded.

In each of the above-described data structures, dummy data (e.g., 00h) may be optionally allocated such that a delimiter of the data allocation should correspond to a border between ECC blocks . For example, an anchor volume descriptor pointer, a primary volume descriptor, the logical volume descriptor 601, and a logical volume integrity descriptor may each be allocated from a leading position of an ECC block.

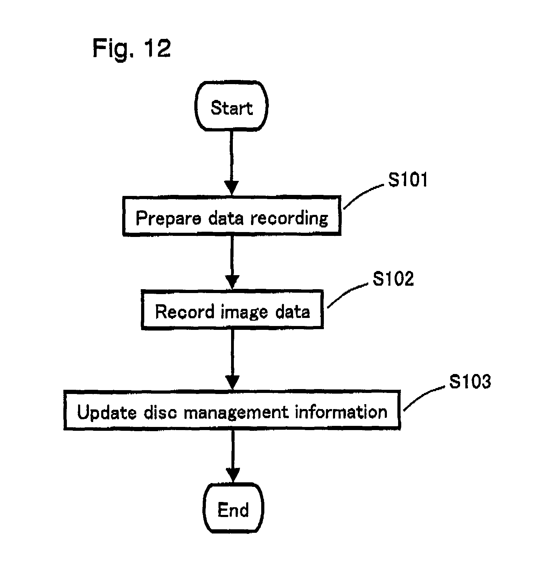

Next, a procedure of recording the image data 500 in the state of Figure 8A will be described with reference to a flowchart shown in Figure 12.

Herein, it is assumed that the image data 500 is created on the magnetic disc apparatus 304, and that it is recorded in the information recording medium 100.

Prior to recording of the image data 500, the system control section 301 and the drive control section 31 read data required for data recording/ reproduction from the disc management information area of the information recording medium 100. When recording of the image data 500 is started, the system control section 301 reads the image data 500 sequentially from the head from the magnetic disc apparatus 304 and transfers it to the memory circuit 302 (step S101).

Next, the system control section 301 instructs the drive apparatus 310 to record the image data 500 (step S102). In this case, the image data 500 is recorded in an unrecorded contiguous area of the iriformation recording medium 10 with reference to the disc management information.

In the state shown in Figure 8A, the entire volume space 109 is in the unrecorded state. In this case, the image data 500 is recorded in the volume space 109 from the head of the volume space 109.

It is assumed that the data recording is performed without a verify process. When the verify process is performed, it is required that the data is reproduced by accessing the data immediately after recording the data.

When the verify process is performed, a time required for recording of the entire image data 500 is significantly increased. Therefore, the verify process is not performed in this step.

After the image data 500 is completely recorded, the procedure goes to the next step.

In order to reflect the result of recording of the image data 500, the disc management information is upated (step S103). For example, the last recorded address information 1107 is updated.

An unrecorded area varies depending on recording of the image data 500. The session management information 200 and/or the space bitmap management information 220 are updated to the latest states.

For example, when the unrecorded area is managed sing the session management information 200, the last data recording location information 213 in the track management information 210 corresponding to a track at which the image data 500 is recorded is updated.

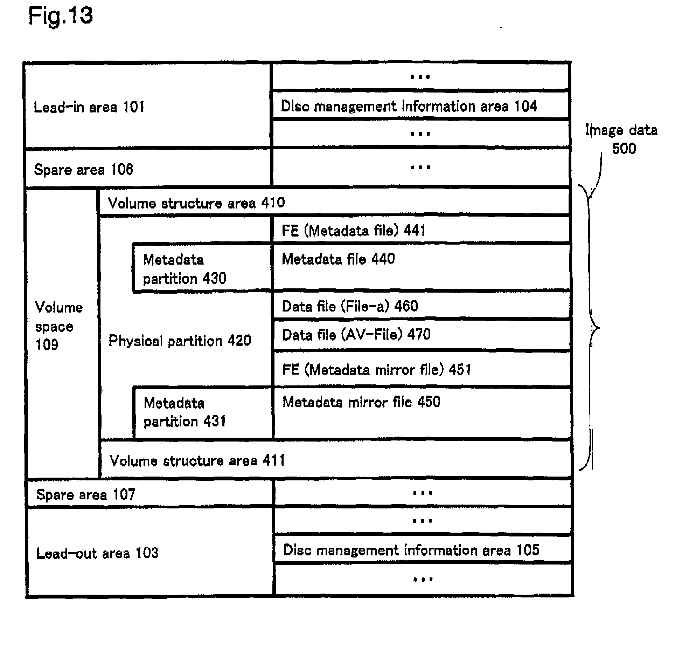

As a result of the above-described recording procedure, the information recording medium 100 has a data structure shown in Figure 13. The image data 500 is recorded in a contiguous area of the volume space 109 which has been unrecorded in Figure 8A.

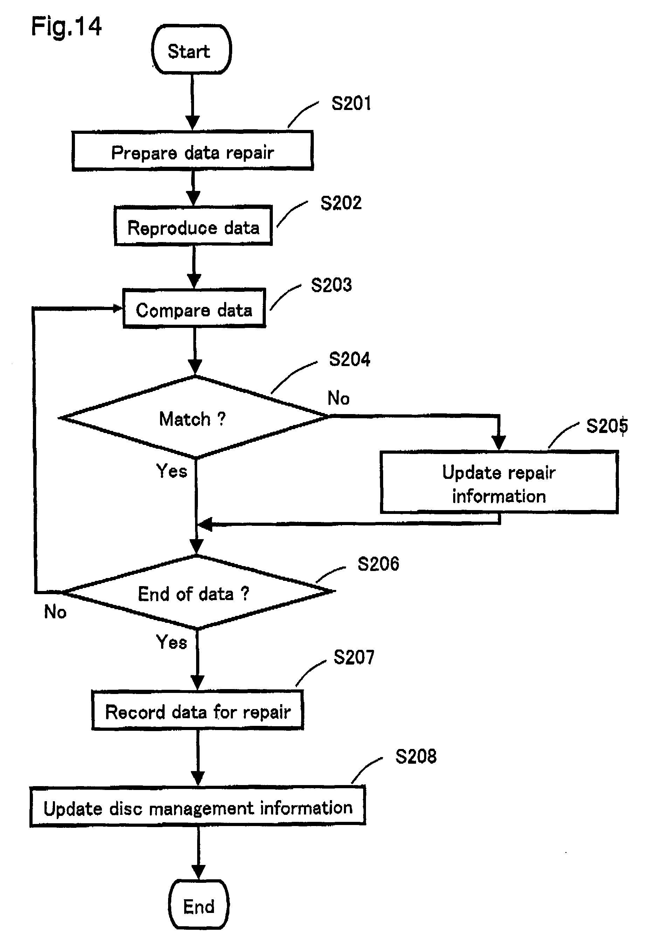

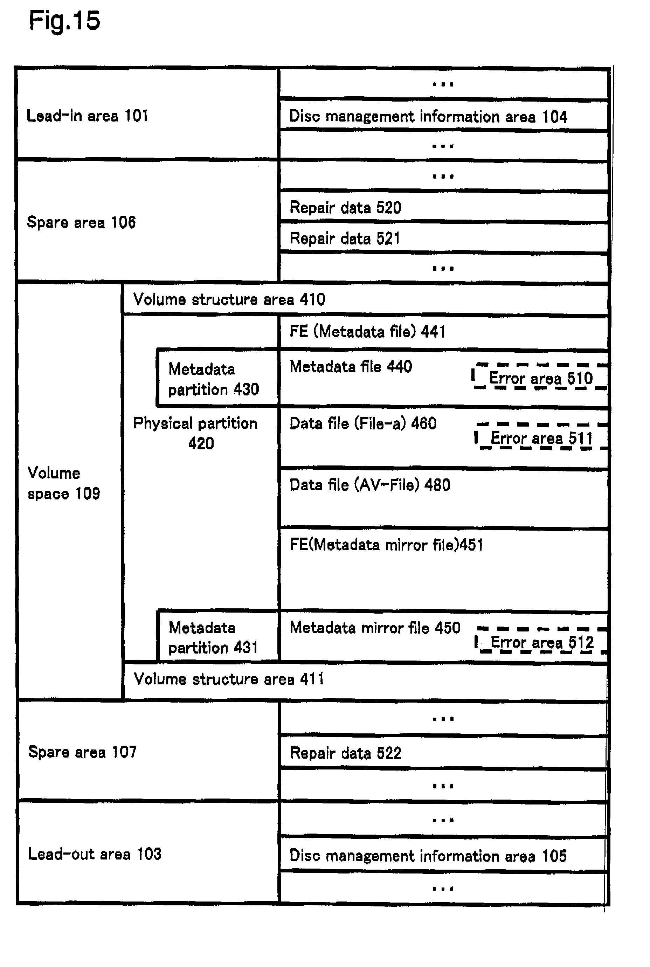

A repair process of recorded data after the above-described image data recording process will be described with reference to Figures 14 and 15.

The system control section 301 prepares data repair (step S201). For example, the system control section 301 and the drive control section 311 read data required for data recording/reproduction from the disc management information area or the like of the information recording medium 100.

In addition, the reproduction of the image data 500 on the magnetic disc apparatus 304 and data recorded on the information recording medium 100 is prepared.

Next, the system control section 301 instruct the drive apparatus 310 to reproduce a predetermined size of data from the head of the image data 500 recorded on the information recording medium 100 (step S202). Herein, the predetermined size is a unit of a sector or an ECC block. Alternatively, the predetermined size is a unit of an integral multiple of a sector or an ECC block.

In particular, it is preferable that the predetermined size is equal to a data rewrite unit of the information recording medium 100 or an integral multiple of the data rewrite unit.

The reproduced data is transferred to the memory circuit 302.

Next, the system control section 301 compares the reproduced data in the memory circuit 302 with at least a part of the image data 500 (step S203). For example, when the image data 500 is stored in the magnetic disc apparatus 304, a portion of the image data 500 corresponding to the reproduced data is transferred from the magnetic disc apparatus 304 to the memory circuit 302, and then the comparison between the reproduced data and the portion of the image data 500 corresponding to the reproduced data is made on the memory circuit 302.

Such a comparison may be made on a place other than the memory circuit 302 (e.g. the memory circuit 312).

As a result of the comparison, it is determined whether or not the reproduced data matches the portion of the image data 500 corresponding to the reproduced data (step S204). When the reproduced data matches the portion of the image data 500 corresponding to the reproduced data, the procedure goes to step S206. Otherwise, the procedure goes to step S205.

When the reproduced data does not match the portion of the image data 500 corresponding to the reproduced data, the system control section 301 determines that the recording of the image data 500 has failed, detects an area where the recording of the image data 500 has failed as an error area, and holds information (e.g. logical address) indicating a location of the data recorded in the error area as a part of repair information (step S205). The repair Information may be stored, for example, in the memory circuit 302 (or the magnetic disc apparatus 304).

In an example shown in Figure 15, each of error areas 510, 511 and 512 is an area where the recording of the image data 500 has failed. Information indicating the respective locations of these error areas may be included in the repair information.

A case where the reproduction of data itself fails, i.e. a reproduction error occurs for some reason, is handled in a manner similar to the case where the reproduced data does not match the portion of the image data 500 corresponding to the reproduced data.

After the process of step S205 is completed, the procedure goes to step S206.

It is determined whether or not the data reproduction/ comparison reaches the end of the image data 500 (step S206).

If the data reproduction/comparison does not reach the end of the image data 500, the procedure returns back to step S202, and the reproduction and comparison for the next data are continued.

If the data reproduction/comparison reaches the end of the image data 500, repair recording is performed for data which has failed to be recorded (step S207). The repair recording includes recording repair data in the replacement cluster and recording replacement information which maps data recorded in the error area to the repair data recorded in the replacement sector.

The system control section 301 extracts, from the image data 500, a portion corresponding to data recorded in the error area as a repair data, instructs the drive apparatus 310 to record the repair data in the replacement sector on the information recording medium 100 (e.g. in the spare area 106 or the spare area 107). This instruction is conveyed using, for example, a predetermined command for repair recording.

In an example shown in Figure 15, the portion corresponding to the data recorded in the error area 510 is extracted as repair data 520 from the image data 500, and the repair data 520 is recorded in the information recording medium 100.

Similarly, repair data 521 for the error area 511 is recorded in the information recording medium 100, and repair data 522 for the error area 512 is recorded in the information recording medium 100.

In this case, it is preferable that repair data for an error area is recorded in a replacement sector which is closer to the error area. This is because an access time during data recording/reproduction can be reduced.

Next, the system control section 301 generates replacement information 1010 which correlates information (e. g. physical address) indicating a location of the data recorded in the error area with information (e.g. physical address) indicating the recording location of the repair data, and reflects the generated replacement information 1010 to the replacement management information list 1000. The replacement management information list 1000 is held in a memory circuit such as the memory circuit 302.

The system control section 301 instructs the drive apparatus 310 to incrementally record a new replacement management information list 1000 in the disc management information area 104. As a result, by the drive apparatus 310, a disc management information including the new replacement management information list 1000 is incrementally recorded in the disc management information area 104.

Alternatively, the system control section 30 may output a replacement information update instruction to the drive apparatus 310. The replacement information update instruction may include information indicating a location of the data recorded in the error area and information indicating the recording location of the repair data in a predetermined format (e.g. logical address).

When the drive apparatus 310 receives the replacement information update instruction, the drive apparatus 310 generates new replacement management information 1010 by translating the logical address included in the replacement information update instruction into a physical address, and adds the new replacement management information 1010 to the replacement management information list 1000.

Then, by the drive apparatus 310, the disc management information including the replacement management information 1010 is incrementally recorded in the disc management information area 104.

According to the structure mentioned above, the same effect can be obtained by updating data recorded in the error area to the repair data using the pseudo -overwrite. A replacement management information 1010 is generated as update information indicating the updated status. The replacement management information 1010 includes an original location information 1012 and a replacement location information 1013. The information indicating a location of the data recorded in the error area is set to the original location information 1012. The information indicating the recording location of the repair data is set to the replacement location information 1013. The generated replacement management information 1010 is recorded in the information recording medium 100.

In the reproduction process described below, by referring to the replacement management information 1010, the data recorded in the error area is not reproduced and the repair data is reproduced. Thus, it is possible to repair information recorded in an area where the recording has failed using a replacement mechanism including replacement information and a replacement sector.

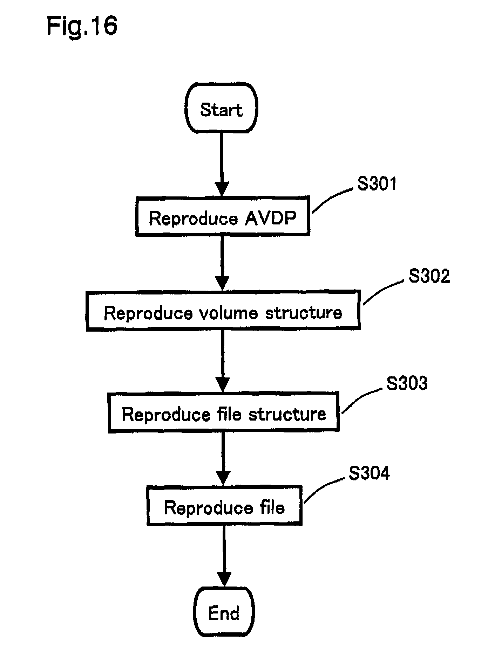

A file reproduction process after the above-described file recording process will be described with reference to Figure 16. Herein, an operation of reproducing the data file (File-a) 460 will be described.

The system control section 301 instructs the drive apparatus 310 to reproduce the AVDP 600 recorded at a predetermined location (e.g. logical address = 256) on the information recording medium 100 (step S301).

Next, the system control section 301 obtains location information of the volume structure 410 from the AVDP 600, and instructs the drive apparatus 310 to reproduce the volume structure 410 (step S302).

The system control section 301 obtains location information of the FE (metadata file) 441 from the volume structure 410.

Next, the system control section 301 reproduces a file structure (step S303). To reproduce the file structure, the system control section 301 instructs the drive apparatus 310 to reproduce data based on the obtained location information of the FE (metadata file) 441.

Thereafter, recording location or the like of the data file (File-a) 460 are obtained from the reproduced file structure, and the data file (File-a) 460 is reproduced (step S304).

The reproduction instruction from the system control section 301 to drive apparatus 310 specifies at least location information indicating a location from which data is to be read. The location information is represented by a logical address. When the drive apparatus 310 receives the reproduction instruction, the drive apparatus 310 translats the logical address specifiedin the reproduction instruction into a physical address. Then, the drive apparatus 310 refers to the replacement management information list 1000, retrieves the replacement management information 1010 holding the physical address as the original location information 1012.

When replacement management information 1010 corresponding to the logical address specified in the reproduction instruction is found in the replacement management information list 100, the replacement location information 1013 included in the found replacement management information 1010 is obtained. As a result, a physical address at which data is actually recorded is obtained, such that the physical address should correspond to the logical address specified in the reproduction instruction. Then, the data on the physical address is reproduced. The reproduced data is output to the system control section 301.

Specifically, for example, when the reproduction instruction is provided for the logical address of the error area 510 shown in Figure 15, the drive apparatus 310 retrieves the replacement management information list 1000 so as to obtain the physical address of the repair data 520.

The repair data 520 is reproduced and the repair data is output to the system control section 301.

A similar process is applied for other error areas.

According to the structure mentioned above, it is possible to repair information recorded in an area there the recording has failed using a replacement mechanism including replacement information and a replacement sector.

In addition, the number of times of accessing data can be reduced as compared to when a verify process is executed successively when recording an image data.

As a result, it is possible to record an image data with high speed and high reliability.

In addition, it is possible to reproduce data without being aware of data repair on a logical space.

### (Embodiment 2)

A repair process different from that of Embodiment 1 will be described.

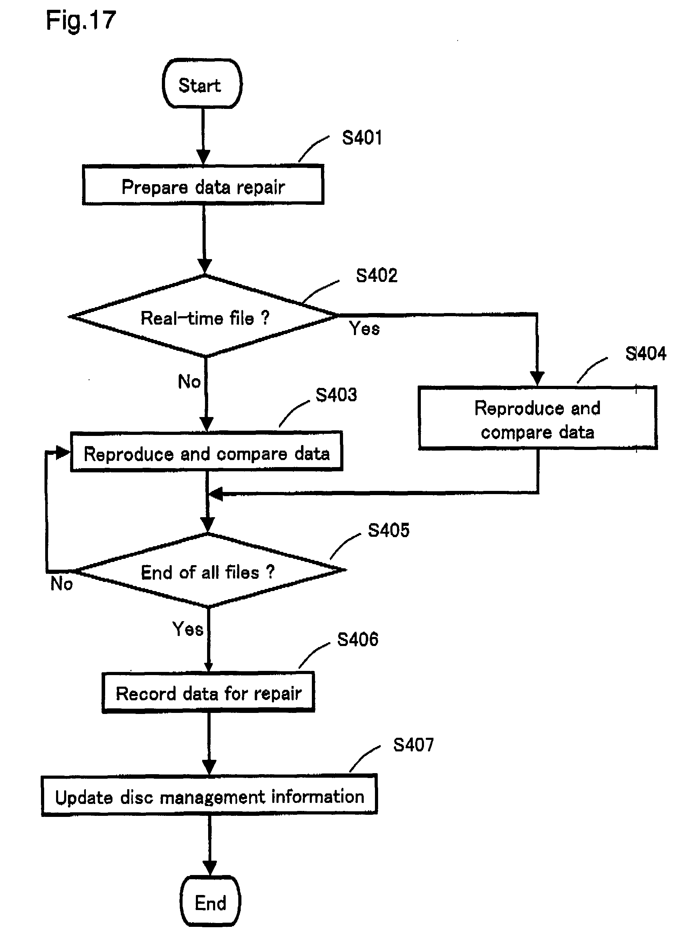

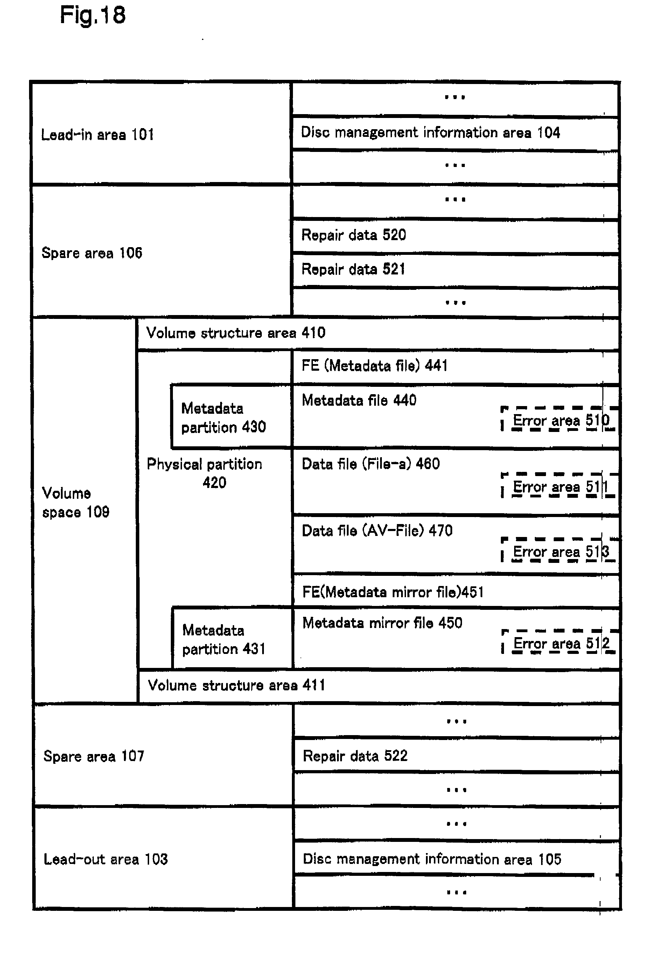

A repair process with respect to the state of Figure 13 will be described with reference to Figures 17 and 18.

Figure 18 is a diagram showing a data structure after a repair process is performed according to an embodiment of the present invention.

The system control section 301 prepares data repair (step S401). Herein, this process is similar to that of step S201.

In addition, the system control section 301 analyzes a file structure included in the image data 500. Based on the result of analysis, the following process is performed in a unit of each file included in the image data 500.

It is determined whether or not a file to be processed is a real-time file (step S402). The determination can be achieved by, for example, referring to a file type defined in the UDF specification.

For example, when the data file (File-a) 460 is not a real-time file, the procedure goes to step S403.

In this case, the system control section 301 instructs the drive apparatus 310 to perform reproduction and comparison of a file (step S403). More specifically, in this step, each step of the reproduction and comparison described in Figure 14 is performed with respect to the entire image data 500.

A detected error area (e.g., 510, 511, 513, etc.) is registered to repair information.

For example, when the data file (AV-File) 480 is a real-time file, the procedure goes to step S404.

In this case, the system control section 301 instructs the drive apparatus 310 to perform reproduction and comparison of a file (step S404). More specifically, in this step, each step of the reproduction and comparison described in Figure 14 is performed with respect to the entire image data 500.

A detected error area (e.g., 512) is registered to the repair information.

In both steps S403 and S404, an error area is registered to the repair information. In this case, it is assumed that information indicating whether or not an error area to be registered is included in a real-time file is stored in the repair information. Hereinafter, the information is referred to as an error area type.

In or after step S403, it is determined whether or not there is a file remaining in the image data 500 (step S405). If a file remains, the procedure returns to step S402, so that the remaining file is processed.

If it is determined in step S405 that all files have been processed, the procedure goes to step S406.

Thereafter, repair recording of data is performed (step S406). In step S406, this process is similar to that of step S207.

The following process is different from that of step S207. Specifically, an error area type is referred to in the repair information, and if an error area is included in a real-time file, repair data is not recorded in a replacement sector.

If the error area is not included in a real-time file, a process is similar to that of step S207.

Thereafter, disc management information is updated (step S407). In step S407, a process is similar to that of step S208.

The following process is different from that of step S208. Specifically, an error area type is referred to in the repair information, and if an error area is included in a real-time file, information which is valid only for the original location information 1012 is stored with respect to newly generated replacement management information 1010, and the replacement location information 1013 is caused to be invalid.

If the error area is not included in a real-time file, a process is similar to that of step S208.

The repair process is performed in unit of a file in the flowchart of Figure 17, and therefore, repair of the volume structure area 410 or the like is not executed. For data other than these files, the repair procedure described in Figure 14 of Embodiment 1 may be executed.

According to the structure mentioned above, it is possible to repair information recorded in an area where the recording has failed using a replacement mechanism including replacement information and the replacement sector.

It is determined whether or not a file is a real-time file, on a file-by-file basis. When the file is not a real-time file, the repair data is recorded in the replacement sector in a manner similar to Embodiment 1. When the file is a real-time file, the repair data is not recorded in the replacement sector. Thus, an access operation is not executed during reproduction of a real-time file, so that data reproduction is not interrupted.

A real-time file and the other files are preferably recorded in different ECC blocks. In this case, when pair recording is executed for an area which is not a real-time file, it is possible to avoid an area of the real-time file from being subjected to repair recording.

On the other hand, an error area including a real-time file is registered into the replacement management information list 1000. Therefore, the error area can be detected before reproduction of the real-time file. Therefore, for example, reproduction can be executed while avoiding the area, leading to an improvement in system reliability.

Since data of a real-time file itself is not repaired, the entire step S404 can be omitted to reduce the processing time of a repair process.

In the above-described embodiment, by referring to a file type defined in, for example, the UDF specification, it can be determined whether or not a file is a real-time file. Alternatively, tracks may be independently assigned to an area in which a real-time file is recorded and the other areas.

### (Embodiment 3)

In the present embodiment, a method for recording image data particularly including AV data, and repairing an error in recording using pseudo -overwrite recording will be described. Conventionally, there has been a problem that, while recording is performed using image data, if an error occurs in recording data, repairing is impossible. The present embodiment can solve such a problem.

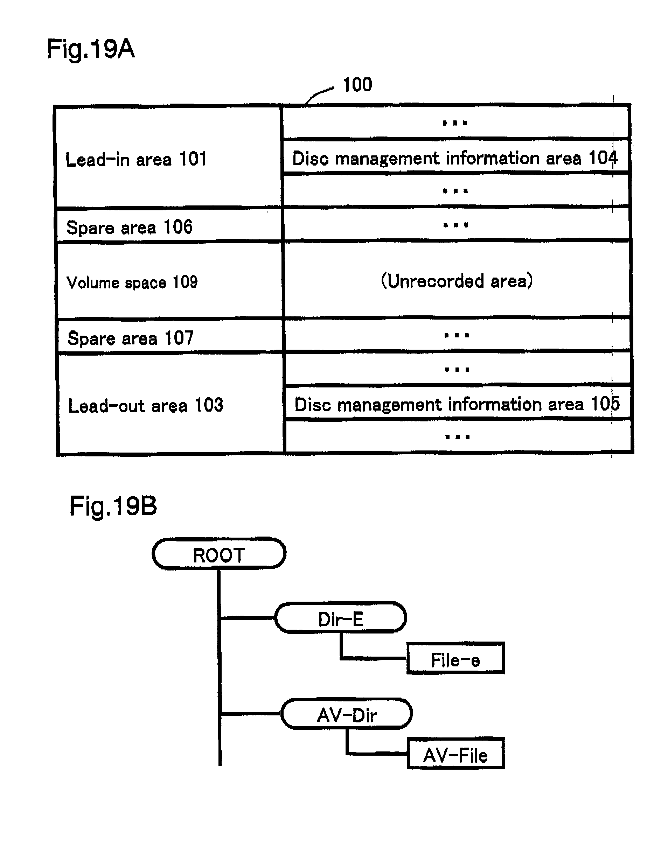

Figures 19A and 19B illustrate data structures on an information recording medium 100 immediately before image data is recorded according to the present embodiment. As shown in Figure 19A, there are a lead-in area 101 including a disc management information area 104, and a lead-out area 103 including disc management information area 105. In a volume space 109, no data has been recorded yet.

A procedure of recording image data 2000 including a file and directory tree structure shown in Figure 19B to such a state and a data structure will be described. As shown in Figure 19B, a data file (File-e) which is a general data file, a directory (Dir-E) which is its parent directory thereof, a real-time file (AV-File) including AV data encoded by an MPEG scheme or the like, and a directory (AV-Dir) which is its parent directory thereof.

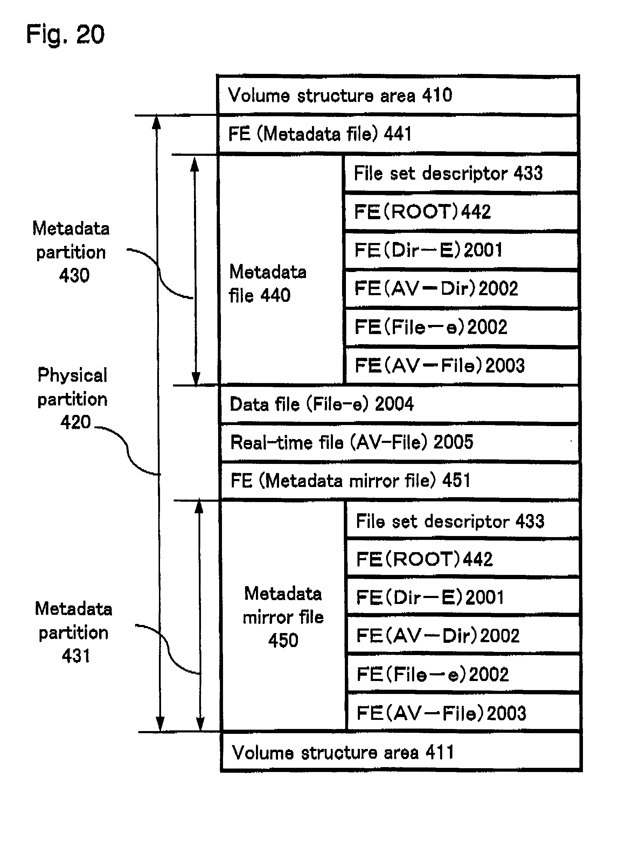

Figure 20 shows a data structure of the image data 2000. The image data 2000 is a file which is obtained by combining directory tree structure shown in Figure 19B and file management information for managing them into one file.

The image data 2000 includes a volume structure area 410, FE (metadata file) 441, a metadata file 440, a data file (File-e) 2004, a real-time file (AV-File) 2005, FE (metadata mirror file) 451, a volume structure area 411, and a metadata mirror file 450. The arrangement of these files is not limited to this order. Any order may be taken as far as the order is conformed with the UDF specification.

The same data structures as the above-described image data 500 are denoted by the same reference numerals.

The areas except for the volume structure area 410 and 411 are areas corresponding to a physical partition 420 defined by the UDF specification version 2.5 or the like. Further, the physical partition 420 includes metadata partition 430 and 431 therein. As described above, the metadata partition includes file management information.

Specifically, in the example shown in Figure 20, a file set descriptor 433, FE (ROOT) 442, FE (Dir-E) 2001, FE (AV-Dir) 2002. FE (File-e) 2002, and FE (AV-File) 2003 are included in the metadata file 440. The metadata mirror file 450 has the same data as the metadata file 440.

In the description below, for the sake of the simplicity of the description, the directory files are included in FE.

The recording location and the size of the metadata file 440 and the metadata mirror file 450 in the physical partition 420 are respectively managed by the FE (metadata file) 441 and the FE (metadata mirror file) 451.

On the other hand, a data file (File-e) 2004 and a real-time file (AV-File) 2005 are allocated in the physical partition 420.

Particularly, the real-time file (AV-File) 2005 is allocated in a contiguous area which satisfies the predetermined conditions in the physical partition 420 so that data is reproduced without interruption while being reproduced.

Such image data 2000 is previously formed on the magnetic disc apparatus 304 or the like, and then, recorded in the volume space 109 sequentially from the head.

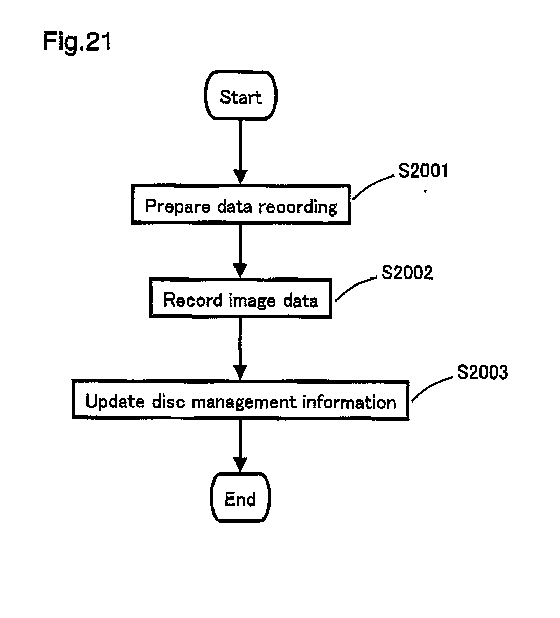

Next, a procedure of recording the image data 2000 in the state of Figure 19A will be described with reference to a flow chart shown in Figure 21.

Herein, it is assumed that the image data 2000 is created on the magnetic disc apparatus 304, and that it is recorded in the information recording medium 100.

Prior to recording the image data 2000, the system control section 301 and the drive control section 311 read data required for data recording/reproduction from the disc management information area of the information recording medium 100 (step S2001).

Then, the recording of image data 2000 is started (step S2002). The system control section 301 reads the image data 2000 sequentially from the head from the magnetic disc apparatus 304, and transfers it to the memory circuit 302.

The system control section 301 instructs the drive apparatus 310 to record the image data 2000. In this case, the image data 2000 is recorded in an unrecorded contiguous area of the information recording medium 100 with reference to the disc management information.

In the state shown in Figure 19A, the entire volume space 109 is in the unrecorded state. In this case, the image data 2000 is recorded in the volume space 109 from the head of the volume space 109.

It is assumed that the data recording is performed without a verify process. After the image data 2000 is all recorded, the procedure proceeds to the next step.

Next, disc management information is updated (step S2003). Such a process is performed in order to reflect the results of recording the image data 2000.

For example, last recorded address information 1107 is updated. Further, since the unrecorded area is changed in accordance with recording of image data 2000, session management information 200 and/or space bitmap management information 220 are updated to the latest state.

For example, when the unrecorded area is managed using the session management information 200, the last data recording location information 213 is updated in the track management information 210 corresponding to a track recorded in the image data 500.

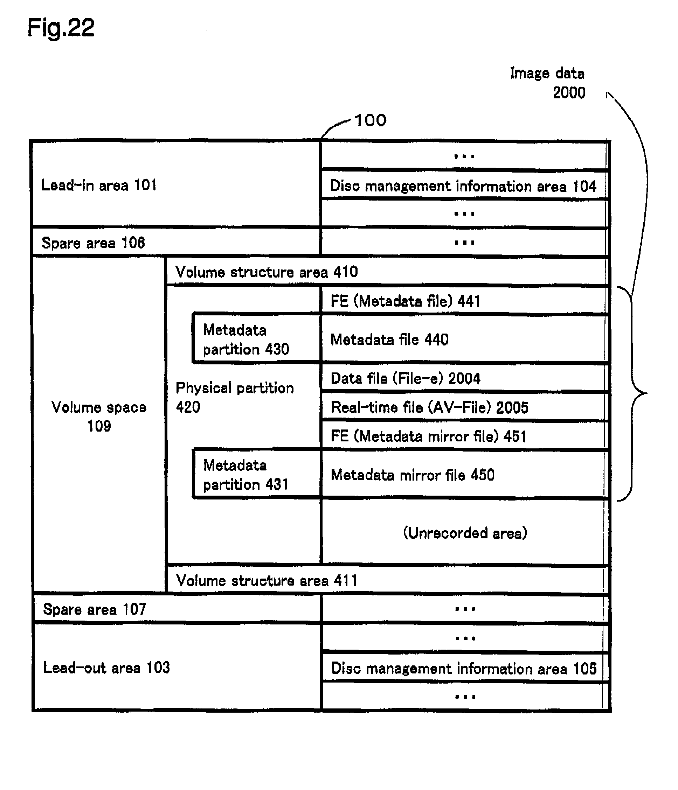

As a result of such a recording procedure, the data structure on the information recording medium 100 becomes one as shown in Figure 22. The image data 2000 is continuously recorded in the volume space 109 which remains unrecorded in Figure 19A.

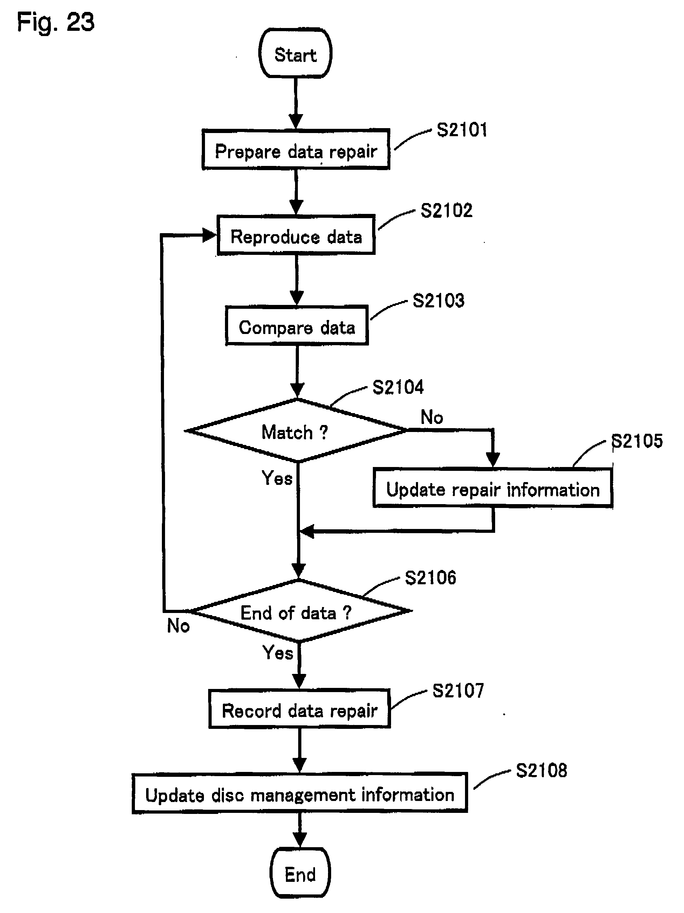

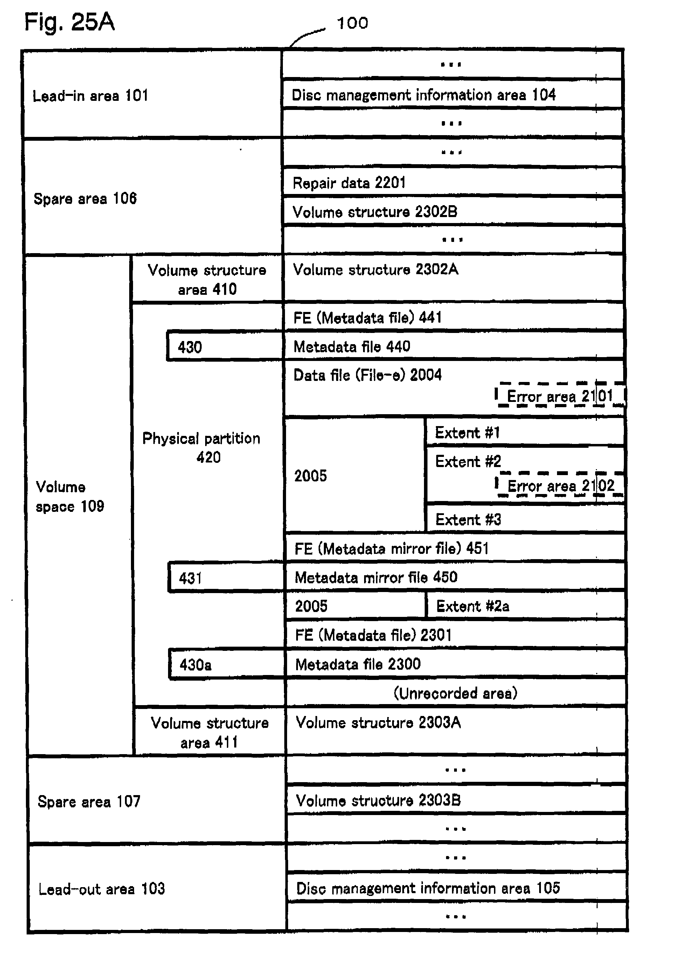

After completing the recording processing of the image data, the repair processing for recorded data is performed. With reference to Figures 23 and 25A, the repair processing for recorded data will be described.

The system control section 301 prepares the data repair (step S2101). For example, the system control section 301 and the drive control section 311 read data required for data recording/reproduction from the disc management information area and the like of the information recording medium 100.

In addition, the reproduction of the image data 2000 on the magnetic disc apparatus 304 and the data recorded on the information recording medium 100 is prepared

Next, the system control section 301 instructs the drive apparatus 310 to reproduce data having a predetermined size from a leading position of the image data 2000 recorded on the information recording medium 100 (step S2102). Herein, the predetermined size is represented as a unit of sector or a unit of ECC block. Alternatively, the predetermined size may be represented as a unit of integer times of sector or ECC block.

In particular, it is preferable that the predetermined size is equal to a data rewrite unit of the information recording medium 100 or an integral multiple of the data rewrite unit.

The reproduced data is transferred to the memory circuit 302.

Next, the system control section 301 compares the reproduced data in the memory circuit 302 with at least a part of the image data 2000 (step S2103). For example, when the image data 2000 is stored in the magnetic disc apparatus 304, a portion of the image data 2000 corresponding to the reproduced data is transferred from the magnetic disc apparatus 304 to the memory circuit 302, and then the comparison between the reproduction data and the portion of the image data 2000 corresponding to the reproduced data is made on the memory circuit 302.

Such a comparison may be made on a place other than the memory circuit 302 (e.g. the memory circuit 312).

As a result of the comparison, it is determined whether or not the reproduced data matches the portion of the image data 2000 corresponding to the reproduced data (step S2104).

When the reproduced data matches the portion of the image data 2000 corresponding to the reproduced data, the procedure goes to step S2106. Otherwise, the procedure goes to step S2015.

When the reproduced data does not match the portion of the image data 2000 corresponding to the reproduced data, the system control section 301 determines that the recording of the image data 2000 has failed, detects an area where the recording of the image data 2000 has failed as an error area, and holds information (e.g. logical address) indicating a location of the data recorded in the error area as a part of repair information (step S2105). The repair information may be stored, for example, in the memory circuit 302 (or the magnetic disc apparatus 304).

In an example shown in Figure 25A, each of error areas 2101, 2102 is an area where the data recording of the image data has failed. Information indicating the respective locations of these error areas may be included in the repair information.

A case where the reproduction of data itself fails, i.e. a reproduction error occurs for some reason, is handled in a manner similar to the case where the reproduced data does not match the portion of the image data 2000 corresponding to the reproduced data.

When the process of step S2015 is completed, the processing goes to step S2106.

It is determined whether or not the data reproduction/ comparison reaches the end of data (stop S2106) .

If the data reproduction/comparison does not reach the end of image data 2000, the procedure returns back to step S2102, and the reproduction and comparison for the next data are continued.

If the data reproduction/comparison reaches the end of image data 2000, repair recording is performed for data which has failed to be recorded (step S2107).

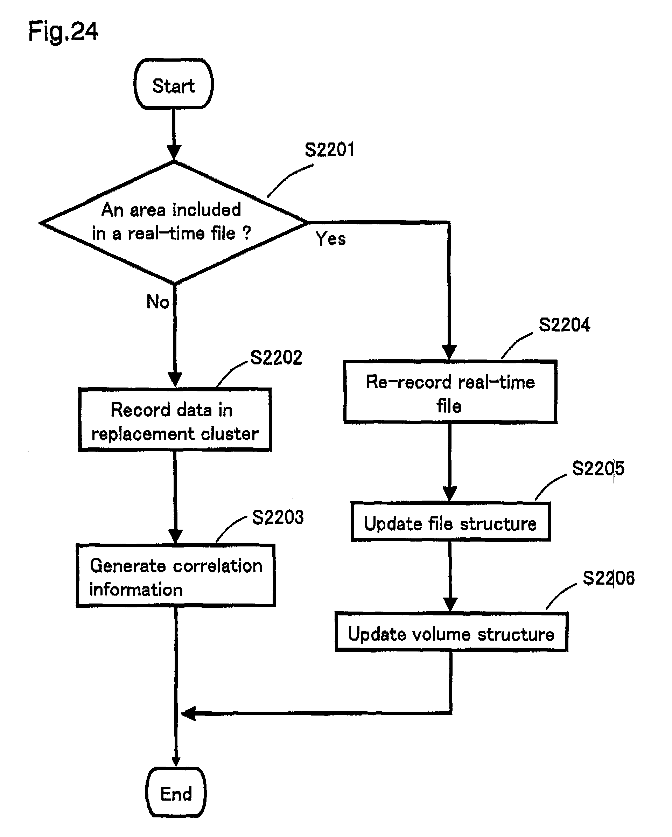

The processing for this step is selected depending on the kind of error area. The processing for this step will be described below in more detail with reference to Figure 24.

By referring to the information specifying the error area, which is stored as the repair information, it is determined whether or not the error area is included in an extent of a real-time file (step S2201).

This determination can be made, for example, by checking the file entry (FE) in the file structure. This is because each FE holds information relating the position and the size of extents composing each file in the partition space. Further, by referring to a file type defined by the UDF specification, it is possible to determine whether or not each file is a real-time file.

For example, the error area S2101 is an area which is not included in any extent of any real-time file. In this case, the processing proceeds to step S2202. On the other hand, the error area S2102 is an area which is include in an extent of a real-time. In this case, the processing proceeds to step S2204. Otherwise, the processing proceeds to step S2202.

The repair data corresponding to the error area (i.e. data indicating correct contents for the error area) is recorded in the replacement cluster (e.g. the spare area 106 or the spare area 107) (step S2202). The data corresponding to the error data is read from a corresponding location of the image data 2000, the read data is recorded in the spare area as the repair data. For example, in Figure 25A, the repair data 2201 is recorded for the error area 2101.

These processing steps are performed, for example, by the system control section 301 issuing a predetermined command for the repair recording to the drive apparatus 310.

It is desirable to record the repair data corresponding to the error data at the location in the replacement cluster which is close to the error area. This makes it possible to reduce the access time required for the data recording/reproduction.

The system control section 301 generates correlation information and holds the correlation information in the memory such as the memory circuit 302 or the memory circuit 312 (step S2203). The correlation information is information for correlating the location information of the error area with the recording location of the repair data in the spare area.

The real-time file is re-recorded (step S2204). In this case, as described above, in order to reproduce the real-time file without any interruption (i.e. in order to perform seamless reproduction), it is required to locate the real-time file in a physically contiguous area which satisfies predetermined criteria.

However, when the error area is included in the real-time file, there is a possibility that the reproduction of the real-time file is interrupted due to the suspension of supplying the data from the error area.

In this step, an area including the error area on the real-time file is examined. The area including the error area may cause the interruption of the reproduction of the real-time file. Specifically, in Figure 25A, the area including the error area corresponds to extent #2 included in the real-time file (AV-File) 2005.

The data corresponding to extent #2 is read from the image data 2000, and the read data is recorded in an unrecorded area in the volume space 109 as extent #2a (data including the correct content of extent #2).

The length of extent #2a is determined such that predetermined criteria are satisfied. The predetermined criteria are for reproducing the repaired real-time file (AV-File) 2008 including extent #2a without any interruption.

In this example, there is only one error area in a real-time file. However, there may be a plurality of error areas in a real-time file. In this case, a similar processing is applicable . As described above, the length of each extent is determined when the extent is re-recorded, such that the reproduction of the extent can be performed without any interruption.

Next, the file structure is updated to reflect re-recording of the extent (step S2205) . In step S2204, the extent of the real-time file (AV-File) 2005 is changed. In order to reflect this change, the file structure should be updated. In this example, it is required to update the FE for managing the real-time file (AV-File) 2005. The update of the file structure can be made, for example, by updating the metadata file.

In an example shown in Figure 25A, the metadata file 2300, which is the update of the metadata file 440, is recorded in an unrecorded area in the volume space 109. Further, the FE (metadata file) 2301 for managing the metadata file 2300 is recorded.

The volume structure is updated (step S2206) In step S2205, the file structure is updated. By pseudo-overwriting the volume structure, the volume structure which refers to the file structure is updated to the latest information.

Specifically, in Figure 25A, the update of the volume structure corresponds to the update of the volume structures 2302A and 2303A to the volume structures 2302B and 2303C.

The repair recording processing is performed for every error area included in the repair information. When the repair processing is completed, the processing returns back to the processing in Figure 23.

The disc management information is updated (step S2108). This update processing includes the following steps.

The system control section 301 generates new replacement management information 1010 from the correlation information obtained in step S2203 in the memory circuit 302 and the like.

For example, a predetermined translation (e.g. the translation of a logical address into a physical address) is performed for the information included in the correlation information (e.g. the indicating a location of the data recorded in the error area and the information indicating a location of the replacement cluster at which the repair data is recorded).

The generated replacement management information 1010 includes an original location information 1012 and a replacement location information 1013. The location of data recorded in the error area is set to the original location information 1012. The location of the replacement cluster at which the repair data is recorded is set to the replacement location information 1013.

Further, a new replacement management information list 1000 including the generated replacement management information 1010 is generated. The replacement management information 1010 which is generated by pseudo-overwriting the volume structure in step S2206 is added to the new replacement management information list 1000.

The system control section 301 instructs the drive apparatus 310 to record the generated replacement management information list 1000. The drive apparatus 310 incrementally records the new replacement management information list 1000 in the disc management information area 104.

The system control section 301 may generate a replacement information update instruction including information indicating the location of the data recorded in the error area and information indicating the recording location of the repair data in a predetermined format (e.g. logical address) from the correlation information obtained in step S2203, and output the replacement information update instruction to the drive apparatus 310.

When the drive apparatus 310 receives the replacement information update instruction, the drive apparatus 310 translates the logical address included in the replacement information update instruction into a physical address, generates replacement management information 1010, adds the generated replacement management information 1010 to the replacement management information list 1000, and incrementally records the replacement management information list 1000 in the disc management information area 104.

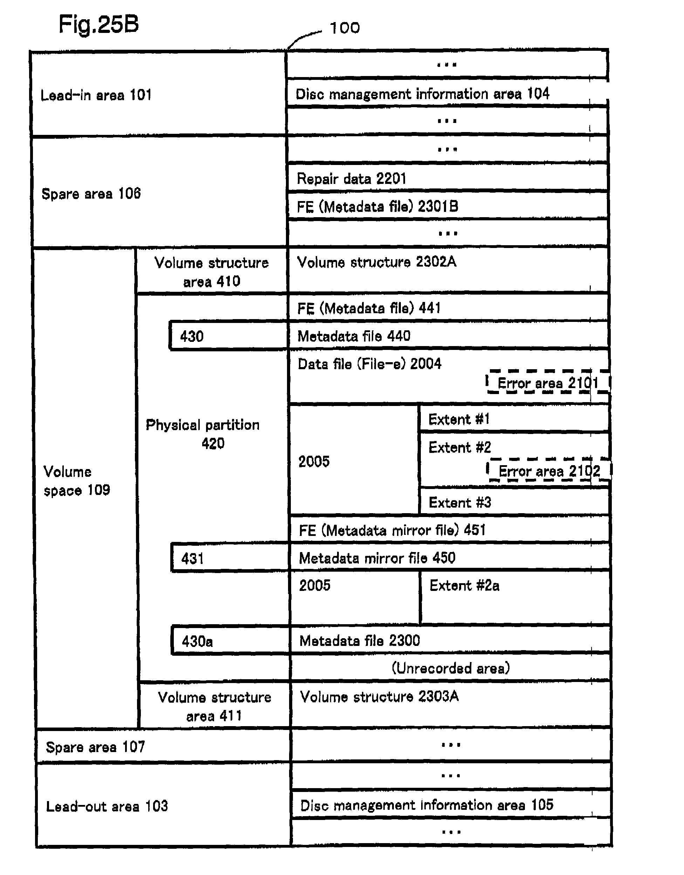

In step S2205, in order to reflect the re-recording of the extent, the file structure is updated to the latest information by pseudo-overwriting the volume structure. However, it is possible to pseudo-overwrite a portion other than the volume structure in the file structure (e.g. FE (metadata file)). For example, as shown in Figure 25B, it is possible to pseudo-overwrite FE (metadata file) 441 b y FE (metadata file) 2301B.

Alternatively, it is possible to pseudo -overwrite an FE of a real-time file which has been repaired.

The repair operation described above is equivalent to updating the data recorded in the error area to the repair data. The replacement management information 1010 and the file structure after update are recorded in the information recording medium 100 as update information to reflect the update status to the file system. The replacement management information 1010 is information which correlates the file structure before update (e.g. volume structure 2302A, FE (metadata file) 441, or the like) with the file structure after update (e.g. volume structure 2302B and FE (metadata file) 2301B, or the like). The file structure before update is first address information indicating the location of the data recorded in the error area. The file structure after update is second address information indicating the recording location of the repair data.

In the reproduction procedure described below, the file structure after update is reproduced by referring to the replacement management information 1010. As a result, the data recorded in the error area is not reproduced, and the repair data is reproduced. Thus, it is possible to repair the information in an area where the recording has failed using a replacement mechanism including replacement information and replacement sector.

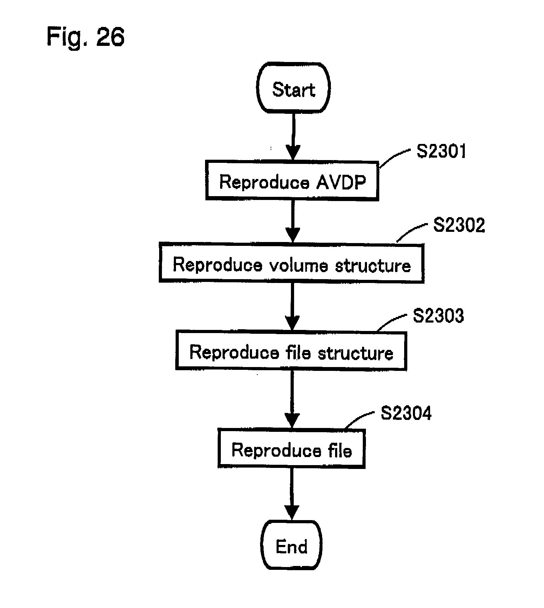

After completing the processing for recording such a file, the processing for reproducing the file is performed. With reference to the flowchart shown in Figure 26 the processing for reproducing the file will be described below. Herein, an operation of reproducing the data file (File-e) 2004 will be described as an exemplary reproduction operation.

The system control section 301 instructs the drive apparatus 310 to reproduce the AVDP 600 recorded in a predetermined location (e.g. logical address = 256) of the information recording medium 100 (step S2301).

Next, the system control section 301 obtains the location information of the volume structure 410 from the AVDP 600, and instructs the drive apparatus 310 to reproduce the volume structure 410 (step S2302).

Upon the receipt of the instruction, the drive apparatus 310 refers to the replacement management information list 1000, retrieves the replacement management information 1010 holding the location information of the logical volume descriptor 601 as the original location information 1012. When the drive apparatus 310 retrieves the replacement management information 1010, it obtains the replacement location information 1013 included in the replacement management information 1010. As a result, the location information of the volume structure 2302B is obtained. The drive apparatus 310 reproduces the volume structure 2302B and returns it back to the system control section 301. Upon the receipt of the volume structure 2302B, the system control section 301 obtains the location information of the FE (metadata file) 2301 from the partition map (type 2) included in the volume structure 2302.

Next, the system control section 301 reproduces the file structure (step S2303). In order to reproduce the file structure, the system control section 301 instructs the drive apparatus 310 to reproduce the FE (metadata file) 2301, based on the location information of the obtained FE (metadata file) 2301.

The location information of the metadata file 2300 is obtained from the reproduced FE (metadata file) 2301. Thus, it is possible to access the metadata file 2300 included in the latest file management information.

The recording location of the data file (File-e) 2004 is obtained from the reproduced file structure, and the data file (File-e) 2004 is reproduced (step S2304). In order to reproduce the data file (File-e) 2004, the system control section 301 outputs a reproduction instruction to the drive apparatus 310. In the reproduction instruction, the location information of the data file (File-e) 2004 is represented by a logical address. Upon receipt of the reproduction instruction, the drive apparatus 310 translats the logical address into a physical address. The drive apparatus 310 refers to the replacement management information list 1000, and retrieves the replacement management information 1010 holding the physical address as the original location information 1012.

When the drive apparatus 310 retrieves the replacement management information 1010, it obtains the replacement location information 1013 included in the replacement management information 1010. As a result, the physical address corresponding to the logical address in the reproduction instruction is obtained. The drive apparatus 310 reproduces the data located at the physical address and returns it back to the system control section 301.

In an example shown in Figure 25A, when a reproduction instruction including the logical address of the error area 2101 is output to the drive apparatus 310, the drive apparatus 310 retrieves the replacement management Information list 1000, and obtains a physical address of the repair data 2201.

The drive apparatus 310 reproduces the repair data and returns it back to the system control section 301.

A similar processing is applicable to other error areas.

On the other hand, in the reproduction of the real-time file (AV-File) 2005, the extents included in the file entry may be reproduced in steps. This is because, as described in reference to Figure 23, in the repair of the extent including the real-time data, the extent is re-recorded without using the replacement mechanism and the file structure is updated by pseudo-overwriting.

According to the processing mentioned above, in the recording of the image data 2000, it is possible to repair the information of the failed-recording area (error area) using a replacement mechanism including replacement information and replacement sector.

If the replacement mechanism is used for the real-time file, the AV data is allocated in discrete locations so that the AV data cannot be reproduced without any interruption. According to the present embodiment of the invention, by re-recording the extent of the real-time file including the error area in the user data area, it is possible to repair the data and satisfy the allocation criteria of the AV data. The update of the file structure required for the repair processing is realized by pseudo-overwriting the file structure.

The repair of error areas in the real-time file is realized without using any spare area. Accordingly, it is not necessary to allocate a large size of spare area. As a result, it is possible to reduce the burden of the implementation and efficiently utilize the data area on the information recording medium.

By implementing the repair function mentioned above, even if the quality of the information recording medium at the time of manufacturing them is reduced, it is possible to achieve a high reliability as a whole system. This provides a significant industrial advantage in that the cost of manufacturing the discs can be reduced.

On the logical space, the file structure obtained after the repair is completed as shown in Figure 25A and 25B is the same as the read-only file structure. Thus, it is possible to reproduce data recorded in the write-once recording medium, even in the system which is not capable of performing the reproduction operation for the read-only medium or the rewritable recording medium.

In the recording procedure mentioned above, the repair recording is performed after all of image data is recorded without performing any verifying process. When the image data is recorded while the verifying process is performed, it is necessary to access the recorded data immediately after the data has been recorded and reproduce the recorded data for each minimum unit (e. g. a unit of ECC block) of the data recording. Thus, when the recording of the image data is performed with the verifying process, the time required for recording whole image data 2000 is greatly increased.

On the other hand, in the present embodiment of the invention, the recording of data and the repairing of data both can be made using continuous data access. Accordingly, any extra waiting time for access by the head section 334 and control of disc rotation speed is not required and it is possible to greatly reduce the processing time.

In the embodiments of invention mentioned above, the system control section 301 instructs the drive apparatus 310 to perform pseudo-overwriting. Such an instruction can be made by using a predetermined instruction (command) for performing pseudo-overwriting. Alternatively, upon the receipt of the normal recording instruction, the drive apparatus 310 may detect overwriting of data and may automatically perform pseudo-overwriting.

The present invention is not limited to the above-described embodiments. The present invention can also be applied to, for example, an information recording medium (e.g., a write-once optical disc, etc.) and a recording/reproduction apparatus (e.g., a video recorder, a disc camcorder, etc.).

Although certain preferred embodiments have been described herein, it is not intended that such embodiments be construed as limitations on the scope of the invention except as set forth in the appended claims. Various other modifications and equivalents will be apparent to and can be readily made by those skilled in the art, after reading the description herein, without departing from the scope and spirit of this invention. All patents, published patent applications and publications cited herein are incorporated by reference as if set forth fully herein.

## Claims

1. A recording apparatus for recording information in an information recording medium, comprising:
means for recording image data including a file structure and a file in the information recording medium;
means for reproducing at least a part of the image data recorded in the information recording medium;
means for comparing the reproduced data with a portion of the image data corresponding to the reproduced data so as to detect an area in which the recording of the image data has failed as an error area;
means for extracting, as a repair data, data corresponding to data recorded in the error area from the image data;
means for recording the repair data in the information recording medium;
means for generating update information for updating the data recorded in the error area to the repair data; and
means for recording the update information in the information recording medium.

2. A recording apparatus according to claim 1, wherein the means for generating the update information generates the update information such that the update information includes replacement management information which correlates information indicating a recording location of the data recorded in the error area with information indicating a recording location of the repair data.

3. A recording apparatus according to claim 2, wherein the comparison of the reproduced data with the portion of the image data corresponding to the reproduced data is made per each file included in the image data.

4. A recording apparatus according to claim 3, further comprising:
means for determining whether or not a file in the image data is a real-time file,
wherein the repair data is recorded in the information recording medium when it is determined that the file is not any real-time file.

5. A recording apparatus according to claim 1, further comprising:
means for determining a length of an extent including a part of the real-time data such that the real-time data can be reproduced continuously, when the data recorded in the error area includes a part of the real-time data; and
means for extracting, as a repair data, data corresponding to the extent from image data,
wherein the means for generating the update information generates the update information such that the update information includes replacement management information which correlates a first address indicating a location of the data recorded in the error area with a second address indicating a recording location of the repair data and the second address information.

6. A host apparatus for use in a recording apparatus for recording information in an information recording medium,
the host apparatus comprising a system control section,
wherein the system control section is configured to control a drive apparatus including a recording/reproduction section for performing a recording operation or a reproduction operation for the information recording medium,
the system control section includes:
means for instructing the drive apparatus to record image data including a file structure and a file in the information recording medium;
means for instructing the drive apparatus to reproduce at least a part of the image data recorded in the information recording medium, so as to obtain reproduced data;
means for comparing the reproduced data with a portion of the image data corresponding to the reproduced data so as to detect an area in which the recording of the image data has failed as an error area;
means for extracting, as a repair data, data corresponding to data recorded in the error area from the image data;
means for instructing the drive apparatus to record the repair data in the information recording medium;
means for generating update information for updating the data recorded in the error area to the repair data; and
means for instructing the drive apparatus to record the update information in the information recording medium.

7. A semiconductor integrated circuit for use in a recording apparatus for recording information in an information recording medium,
wherein the semiconductor integrated circuit is configured to control a drive apparatus including a recording/reproduction section for performing a recording operation or a reproduction operation for the information recording medium,
the semiconductor integrated circuit includes:
means for instructing the drive apparatus to record image data including a file structure and a file in the information recording medium;
means for instructing the drive apparatus to reproduce at least a part of the image data recorded in the information recording medium, so as to obtain reproduced data;
means for comparing the reproduced data with a portion of the image data corresponding to the reproduced data so as to detect an area in which the recording of the image data has failed as an error area;
means for extracting, as a repair data, data corresponding to data recorded in the error area from the image data;
means for instructing the drive apparatus to record the repair data in the information recording medium;
means for generating update information for updating the data recorded in the error area to the repair date ; and
means for instructing the drive apparatus to record the update information in the information recording medium.

8. A recording method for recording information in an information recording medium, the recording method comprising the steps of:
recording image data including a file structure and a file in the information recording medium;
reproducing at least a part of the image data recorded in the information recording medium;
comparing the reproduced data with a portion of the image data corresponding to the reproduced data so as to detect an area in which the recording of the image data has failed as an error area;
extracting, as a repair data, data corresponding to data recorded in the error area from the image data
recording the repair data in the information recording medium;
generating update information for updating the data recorded in the error area to the repair data; and
recording the update information in the information recording medium.

9. A method implemented in a host apparatus for use in a recording apparatus for recording information in an information recording medium, the method comprising the steps of:
instructing a drive apparatus to record image data including a file structure and a file in the information recording medium;
instructing the drive apparatus to reproduce at least a part of the image data recorded in the information recording medium, so as to obtain reproduced data;
comparing the reproduced data with a portion of the image data corresponding to the reproduced data so as to detect an area in which the recording of the image data has failed as an error area;
extracting, as a repair data, data corresponding to data recorded in the error area from the image data;
instructing the drive apparatus to record the repair data in the information recording medium;
generating update information for updating the data recorded in the error area to the repair data; and
instructing the drive apparatus to record the update information in the information recording medium.

10. A program implemented in a host apparatus for use in a recording apparatus for recording information in an information recording medium, the program comprising the steps of:
instructing a drive apparatus to record image data including a file structure and a file in the information recording medium;
instructing the drive apparatus to reproduce at least a part of the image data recorded in the information recording medium, so as to obtain reproduced data;
comparing the reproduced data with a portion of the image data corresponding to the reproduced data so as to detect an area in which the recording of the image data has failed as an error area;
extracting, as a repair data, data corresponding to data recorded in the error area from the image data;
instructing the drive apparatus to record the repair data in the information recording medium;
generating update information for updating the data recorded in the error area to the repair data; and
instructing the drive apparatus to record the update information in the information recording medium.

11. An information recording medium having update information recorded thereon,
wherein the update information is information indicating that data recorded in an error area has been updated to a repair data,
the error area is an area in which the recording of image data has failed, and
the repair data is obtained by extracting, from the image data, data corresponding to the data recorded in the error area.
